(19) Europäisches Patentamt
European Patent Office
Office européen des brevets

(11) Publication number: **0 234 385 B1**

# (12) EUROPEAN PATENT SPECIFICATION

(45) Date of publication of patent specification: **11.09.91**

(51) Int. Cl.⁵: **G21K 4/00**, C09K 11/02

(21) Application number: **87101767.9**

(22) Date of filing: **09.02.87**

## (54) Radiation image storage panel.

(30) Priority: **07.02.86 JP 25571/86**
**19.04.86 JP 90618/86**

(43) Date of publication of application:
**02.09.87 Bulletin 87/36**

(45) Publication of the grant of the patent:
**11.09.91 Bulletin 91/37**

(84) Designated Contracting States:
**DE FR GB NL**

(56) References cited:
**GB-A- 2 017 140**
**US-A- 4 360 571**

(73) Proprietor: **FUJI PHOTO FILM CO., LTD.**
**210 Nakanuma Minami Ashigara-shi**
**Kanagawa 250-01(JP)**

(72) Inventor: **Kohda, Katsuhiro c/o Fuji Photo Film Co. Ltd.**
**No. 798, Miyanodai Kaisei-machi**
**Ashigara-kami-gun Kanagawa(JP)**
Inventor: **Takahashi, Kenji c/o Fuji Photo Film Co. Ltd.**
**No. 798, Miyanodai Kaisei-machi**
**Ashigara-kami-gun Kanagawa(JP)**

(74) Representative: **Patentanwälte Grünecker, Kinkeldey, Stockmair & Partner**
**Maximilianstrasse 58**
**W-8000 München 22(DE)**

**EP 0 234 385 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a radiation image storage panel employed in a radiation image recording and reproducing method utilizing a stimulable phosphor. More particularly, the invention relates to a radiation image storage panel comprising a support and a phosphor layer provided on the support which comprises a binder and a stimulable phosphor dispersed therein.

For obtaining a radiation image, a radiation image recording and reproducing method utilizing a stimulable phosphor as described, for instance, in U.S. Patent No. 4,239,968, has been recently proposed and put into practice. In the method, a radiation image storage panel comprising a stimulable phosphor (i.e., stimulable phosphor sheet) is used, and the method involves steps of causing the stimulable phosphor of the panel to absorb radiation energy having passed through an object or having radiated from an object; sequentially exciting the stimulable phosphor with an electromagnetic wave such as visible light or infrared rays (hereinafter referred to as "stimulating rays") to release the radiation energy stored in the phosphor as light emission (stimulated emission); photoelectrically detecting the emitted light to obtain electric signals; and reproducing the radiation image of the object as a visible image from the electric signals.

According to this method, a radiation image is obtainable with a sufficient amount of information by applying a radiation to an object at considerably smaller dose, as compared with a conventional radiography employing a combination of a radiographic film and a radiographic intensifying screen. The method is of great value especially when the method is used for medical diagnosis.

The radiation image storage panel employed in the above-described method has a basic structure comprising a support and a phosphor layer provided on one surface of the support. Further, a transparent film of a polymer material is generally provided on the free surface (surface not facing the support) of the phosphor layer to keep the phosphor layer from chemical deterioration or physical shock.

The phosphor layer comprises a binder and stimulable phosphor particles dispersed therein. The stimulable phosphor emits light (gives stimulated emission) when excited with an electromagnetic wave (stimulating rays) such as visible light or infrared rays after having been exposed to a radiation such as X-rays. Accordingly, the radiation having passed through an object or radiated from an object is absorbed by the phosphor layer of the panel in proportion to the applied radiation dose, and a radiation image of the object is produced in the panel in the form of a radiation energy-stored image. The radiation energy-stored image can be released as stimulated emission by sequentially irradiating (scanning) the panel with stimulating rays. The stimulated emission is then photoelectrically detected to give electric signals, so as to reproduce a visible image from the electric signals.

The radiation image recording and reproducing method is very useful for obtaining a radiation image as a visible image as described hereinbefore, and it is desired for the radiation image storage panel employed in the method to have a high sensitivity and provide an image of high quality (high sharpness, high graininess, etc.), as well as the radiographic intensifying screen employed in the conventional radiography. Especially when the object is a human body, the sensitivity of the panel is desired to be as high as possible to reduce the radiation dose applied to the human body.

As a stimulable phosphor employed in the radiation image storage panel, there eve been proposed phosphors containing iodine as a component thereof such as a divalent europium activated barium fluorohalide phosphor ($BaFX:Eu^{2+}$, in which X is I or a combination of I and Cℓ and/or Br), a divalent europium activated barium halide phosphor ($BaXX':Eu^{2+}$, in which each of X and X' is at least one halogen selected from the group consisting of Cℓ, Br and I, $X \neq X'$, and at least one of X and X' contains I), a cerium activated rare earth oxyhalide phosphor (LnOX:Ce, in which Ln is at least one rare earth element selected from the group consisting of Y, La and lanthanides; and X is I or a combination of I and Cℓ and/or Br), and a bismuth activated alkali metal halide phosphor ($M^{I}X:Bi$, in which $M^{I}$ is Rb and/or Cs; and X is I or a combination of I and Cℓ and/or Br).

However, when these stimulable phosphors containing iodine are used in the radiation image storage panel, the phosphor layer is liable to be gradually colored yellow because the iodine is liberated from the phosphor to produce an iodine molecule ($I_2$). Such yellowing of the phosphor layer causes a problem of prominently decreased sensitivity in the panel.

GB-A-2017140 discloses an X-ray intensifying screen comprising a support and a phosphor layer provided on the support which comprises a binder and a stimulable phosphor dispersed therein which contains iodine and wherein said phosphor layer contains a compound having an epoxy group.

US-A-4360571 discloses the use of at least one compound selected from the group consisting of phosphites, organotin compounds and metal salts of organic acids in a phosphor layer of an intensifying screen.

It is the object of the present invention to provide a radiation image storage panel prevented from being

colored yellow and being improved in sensitivity.

Said object is accomplished by a radiation image storage panel comprising a support and a phosphor layer provided on the support which comprises a binder and a stimulable phosphor dispersed therein, characterized in that said stimulable phosphor is a phosphor selected from the group consisting of divalent europium activated alkaline earth metal fluorohalide phosphors containing iodine and bismuth activated alkali metal halide phosphors containing iodine and that said phosphor layer contains a compound having an epoxy group and/or at least one compound selected from the group consisting of phosphites, organotin compounds and metal salts of organic acids.

In the present specification, tin salts of organic acids are not included in the metal salts of organic acids.

In the present invention, the yellowing of a radiation image storage panel is prevented and the sensitivity of the panel is remarkably enhanced.

The present inventors have found that a phosphor layer tends to be colored yellow when an iodine-containing stimulable phosphor is used in a radiation image storage panel, and hence the light emitted by the phosphor, particularly the light in the blue region, is absorbed in the phosphor layer to extremely decrease the sensitivity of the panel. Such yellowing of the phosphor layer is caused by the phenomena that the iodine is liberated in the form of $I_2$ molecule from the phosphor in a coating dispersion for the preaparation of the phosphor layer, and that the liberated iodine forms an $I_2$ molecule in the prepared phosphor layer, during the preparation of the panel.

In addition, the yellowing of the phosphor layer brings about damage to an external view of the radiation image storage panel to decrease its value as a merchandise.

According to the invention, a compound having an epoxy group and/or at least one compound selected from the group consisting of phosphites, organo-tin compounds and metal salts of organic acids is added to a coating dispersion for the preparation of the phosphor layer whereby iodine liberated from the stimulable phosphor is trapped by these compounds so as to prevent the formation of $I_2$ molecule. Iodine liberated from the phosphor in the prepared phosphor layer is also trapped by these compounds and free from the formation of $I_2$ molecule. In the case of the latter compounds, i.e., phosphites, organotin compounds and metal salts of organic acids, the reason is presumably that the compounds serve as a chelating agent for iodine to trap iodine effectively in a stable state. For instance, it is presumed that the liberated iodine atoms bind to tin in the organotin compound as a ligand to be in a prominently stable state. As a result, the phosphor layer is prevented from yellowing, and a radiation image storage panel having high sensitivity can be obtained. The panel can keep its value of merchanise since it does not color on standing.

Especially, a radiation image storage panel in which the phosphor layer does not only contain the compound having an epoxy group but also the compound selected from the group consisting of phosphites, organotin compounds and metal salts of organic acids is effectively prevented from deterioration (decrease of sensitivity) with the passage of time and more enhanced in sensitivity.

When an epoxy resin is used as the compound having an epoxy group, the epoxy resin also serves as a binder in the same place, so that the adhesion strength between the support and the phosphor layer can be enhanced as well as the improvement in sensitivity. It is included in the scope of the invention that all of the binder of the phosphor layer is an epoxy resin.

Further, the above-mentioned compounds may be incorporated in any parts (layers) other than the phosphor layer of the radiation image storage panel. The present inventors have found that the part close to the phosphor layer also tends to be colored yellow owing to the liberated $I_2$ molecule, which is produced for instance, in that a coating solution for the preparation of said part comes in contact with the iodine-containing stimulable phosphor, or that the part dissolved by the coating dispersion for the preparation of the phosphor layer comes in contact therewith. The light emitted by the stimulable phosphor is further absorbed by the yellowed part to decrease the sensitivity of the panel. Accordingly, it is desired that the part close to the phosphor layer also contains said compounds, for example, a light-reflecting layer, a subbing layer, a protective film, an adhesive agent or a polymer film for covering the side surfaces. The iodine liberated from the stimulable phosphor is efficiently trapped by said compounds in these parts and the formation of $I_2$ molecule does not occur, so that said parts can be prevented from yellowing.

Especially, a panel in which the phosphor layer and the part close thereto contain both the epoxy group-containing compound and the compound selected from phosphites, organotin compounds and metal salts of organic acids can be much more enhanced in sensitivity and reduce the deterioration with time. When an epoxy resin is used as the compound having an epoxy group, the epoxy resin also serves as a binder in the same place, so that the adhesion strength between said part and the layer next thereto can be enhanced. It is included in the scope of the invention that the whole binder of said part is an epoxy resin.

Fig. 1 is a graph showing relationships between the thickness of the phosphor layer and the relative

sensitivity, with respect to a radiation image storage panel containing a compound having an epoxy group according to the present invention (Curve 1) and a conventional radiation image storage panel (Curve 2).

Fig. 2 is a graph showing relationships between the thickness of the phosphor layer and the relative sensitivity, with respect to a radiation image storage panel containing a phosphite according to the present invention (Curve 1) and a conventional radiation image storage panel (Curve 2).

The radiation image storage panel of the present invention having the above-described favorable characteristics can be prepared, for instance, in the following manner.

A support material employed in the panel of the invention can be selected from those employed in conventional radiographic intensifying screens or those employed in known radiation image storage panels. Examples of the support material include plastic films such as films of cellulose acetate, polyester, polyethylene terephthalate, polyamide, polyimide, triacetate and polycarbonate; metal sheets such as aluminum foil and aluminum alloy foil; ordinary papers; baryta paper; resin-coated papers; pigment papers containing for example titanium dioxide; and papers sized with for example polyvinyl alcohol. From the viewpoint of characteristics of a radiation image storage panel as an information recording material and handling thereof, a plastic film is preferably employed as the support material in the panel of the invention. The plastic film may contain a light-absorbing material such as carbon black, or may contain a light-reflecting material such as titanium dioxide. The former is appropriate for preparing a high-sharpness type radiation image storage panel, while the latter is appropriate for preparing a high-sensitivity type radiation image storage panel.

One or more additional layers may be occasionally provided between the support and the phosphor layer. For instance, a subbing layer may be provided to enhance the adhesion therebetween and a light-reflecting layer containing a light-reflecting material or a light-absorbing layer containing a light-absorbing material such as carbon black may be provided to enhance the sensitivity or the image quality. Otherwise, an antistatic layer containing a conductive material such as carbon black, $In_2O_3$ and $SnO_2$ may be provided to enhance the antistatic property of the resulting panel.

The light-reflecting layer comprises a binder and a light-reflecting material dispersed therein.

Examples of the light-reflecting material include white pigments such as $A\ell_2O_3$, $ZrO_2$, $TiO_2$, $BaSO_4$, $SiO_2$, ZnS, ZnO, MgO, $CaCO_3$, $Sb_2O_3$, $Nb_2O_5$, $2PbCO_3 \cdot Pb(OH)_2$, $M^{II}FX$ (in which $M^{II}$ is at least one element selected from the group of Ba, Sr and Ca; and X is at least one element selected from the group of $C\ell$ and Br), lithopone ($BaSO_4$ + ZnS), magnesium silicate, basic lead silicosulfate, basic lead phosphate and aluminum silicate; and polymer particles of a hollow structure (polymer pigment).

The polymer particles of a hollow structure comprise styrene polymers or styrene-acrylic copolymers and are fine particles, generally having an outer diameter ranging from 0.2 - 1 $\mu$m and an inner diameter (diameter of hollow) ranging from 0.05 - 0.7 $\mu$m.

Among these light-reflecting materials, $A\ell_2O_3$, $ZrO_2$, Among these light-reflecting materials, $A\ell_2O_3$, $ZrO_2$, $TiO_2$, $BaSO_4$, $SiO_2$, ZnS. ZnO and $M^{II}FX$ (in which $M^{II}$ and X have the same definition as above) are preferably employed in the panel of the invention. The light-reflecting materials may be employed alone or in combination thereof.

The light-reflecting layer can be formed on the support by the following procedure: The light-reflecting material and a binder are added to an appropriate solvent and they are mixed to prepare a coating dispersion comprising the material dispersed in the binder solution. The coating dispersion is uniformly applied to the surface of the support to form a layer of the coating dispersion, which is subsequently heated to dryness to form a light-reflecting layer. The binder and solvent can be selected from binders and solvents employable in the preparation of a phosphor layer as mentioned below. In the case of the hollow polymer particles, aqueous polymer materials such as acrylic acid copolymers may be employed. The coating dispersion may further contain a dispersing agent, a plasticizer or a colorant.

The ratio between the binder and the light-reflecting material in the coating dispersion is within the range of from 1 : 1 to 1 : 50 (binder : material, by weight), preferably from 1 : 2 to 1 : 20, by weight. The thickness of the light-reflecting layer preferably ranges from 5 to 100 $\mu$m.

The light-reflecting layer may be formed on the support together with the phosphor layer by a simultaneous superposition-coating method.

The light-reflecting layer may contain a compound having an epoxy group and/or at least one compound selected from the group consisting of phosphites, organotin compounds and metal salts of organic acids by adding it to the coating dispersion, to prevent said layer from yellowing. The compound can be selected from compounds employable in the phosphor layer as described below, and may be the same or different from the compound contained therein. The amount of the compound contained in the light-reflecting layer varies depending on the kind and amount of the light-reflecting material and the kind of the binder. In the case of the former epoxy group-containing compound, the amount thereof is generally in

the range of from 0.001 to 10 % by weight of the light-reflecting material, preferably from 0.03 to 3 % by weight and in the case of the latter compound, i.e., phosphite, organotin compound or metal salt of organic acid, the amount thereof is generally in the range of from 0.0001 to 3% by weight of the light-reflecting material, preferably from 0.003 to 0.3 % by weight.

Iodine liberated from an iodine-containing stimulable phophor in the phosphor layer is trapped by said compound, not forming $I_2$ molecules in the light-reflecting layer, and the light-reflecting layer is free from yellowing, so that the light-reflecting layer can sufficiently make an inherent function of reflecting the emitted light towards the phosphor layer (read-out side) to enhance the sensitivity of the resulting panel.

The subbing layer comprises a resin.

Examples of the resin include polyacrylic resins, polyester resins, polyurethane resins, polyvinyl acetate resins and ethylene-vinyl acetate copolymers. The resins employable in the subbing layer are not restricted to the above resins and any other resin (adhesive agent) conventionally employed for the preparation of the subbing layer can be employed in the panel of the invention. The resin of the subbing layer may be crosslinked with a crosslinking agent such as an aliphatic isocyanate, an aromatic isocyanate, melamine, an amino resin or a derivative of one of these compounds.

The subbing layer can be formed on the support by the following procedure: The resin is added to an appropriate solvent to prepare a coating solution. The solvent can be selected from solvents employable in the preparation of a phosphor layer as mentioned below. The coating solution is uniformly applied to the surface of the support to form a layer of the coating solution. The coating procedure can be carried out by a conventional method such as a method using a doctor blade, a roll coater or a knife coater. Subsequently, the layer of the coating solution is heated slowly to dryness to complete the formation of a subbing layer.

The thickness of the subbing layer varies depending on the charcteristics of the panel, the materials employed in the phosphor layer and the support, and the kinds of the resin, and generally ranges from 3 to 50 $\mu$m.

The subbing layer may also contain the compound for the prevention of yellowing by adding it to the coating solution. The compound can be selected from compounds employable in a phosphor layer as described below and may be the same or different from the compound contained therein. The amount of the compound contained in the subbing layer varies depending on the kind and amount of the stimulable phosphor and the kind of the resin. In the case of the epoxy group-containing compound, the amount thereof is generally in the range of from 0.03 to 100 % by weight of the resin, preferably from 1 to 30 % by weight and in the case of the phosphite, organotin compound or metal salt of organic acid, generally in the range of from 0.003 to 30 % by weight of the resin, preferably from 0.01 to 1 % by weight.

Iodine liberated from an iodine-containing stimulable phophor in a phosphor layer is trapped by said compound, not forming $I_2$ molecules in the subbing layer, even when the dissolved subbing layer is in contact with the phosphor during the coating procedure for the preparation of the phosphor layer, so that the subbing layer is free from yellowing.

As described in Japanese Patent Provisional Publication No. 58(1983)-200200, the phosphor layer-side surface of the support (or the surface of a subbing layer, a light-reflecting layer, a light-absorbing layer or an antistatic layer in the case that such layers are provided on the support) may be provided with protruded and depressed portions for enhancement of the sharpness of the image.

A phosphor layer is formed on the support.

The phosphor layer, that is a characteristic requisite of the panel of the invention, comprises a binder, a stimulable phosphor containing iodine, and a compound having an epoxy group and/or at least one compound selected from the group consisting of phosphites, organotin compounds and metal salts of organic acids, the latter two or three being dispersed in a binder.

The stimulable phosphor containing iodine which is employable in the invention contains iodine as a phosphor component. Namely, iodine is contained in the phosphor as at least one of a host component, an additive component and an activator component.

The stimulable phosphor containing iodine, as described hereinbefore, gives stimulated emission when excited with stimulating rays after exposure to a radiation. From the viewpoint of practical use, the stimulable phosphor is desired to give stimulated emission in the wavelength region of from 300 - 500 nm when excited with stimulating rays in the wavelength region of from 400 - 900 nm (e.g. a laser beam such as a He-Ne laser beam or a semiconductor laser beam).

The iodine-containing stimulable phosphor employable in the radiation image storage panel of the invention include for example :

(1) a divalent europium activated alkaline earth metal fluorohalide phosphor having the formula: $(Ba_{1-x}, M^{2+}{}_x)FX:yEu$, in which $M^{2+}$ is at least one divalent metal selected from the group consisting of Mg, Ca, Sr, Zn and Cd; X is at least one element selected from the group consisting of Cℓ, Br and I; and <u>x</u> and <u>y</u>

are numbers satisfying the conditions of $0 \leq x \leq 0.6$ and $0 \leq y \leq 0.2$, respectively, as described in U.S. Patent No. 4,239,968;

The phosphor may contain the following additives:

LiX', $BeX"_2$ and $M^{III}X"'_3$, in which each of X', X" and X"' is at least one element selected from the group consisting of Cl, Br and I; and $M^{III}$ is a trivalent metal, as described in Japanese Patent Provisional Publication No. 56(1981)-74175;

metal oxides such as BeO, MgO, CaO, SrO, BaO, ZnO, $Al_2O_3$, $Y_2O_3$, $La_2O_3$, $In_2O_3$, $SiO_2$, $TiO_2$ $ZrO_2$, $GeO_2$ $SnO_2$ $Nb_2O_5$, $Ta_2O_5$ and $ThO_2$, as described in Japanese Patent Provisional Publication No. 55(1980)-160078;

Zr and Sc, as described in Japanese Patent Provisional Publication No. 56(1981)-116777;

B, as described in Japanese Patent Provisional Publication No. 57(1982)-23673;

As and Si, as described in Japanese Patent Provisional Publication No. 57(1982)-23675;

M•L, in which M is at least one alkali metal selected from the group consisting of Li, Na, K, Rb and Cs; and L is at least one trivalent metal selected from the group consisting of Sc, Y, La, Ce, Pr, Nd, Pm, Sm, Gd, Tb, Dy, Ho, Er, Tm, Yb, Lu, Al, Ga, In and Tl;

fired products of tetrafluoroboric acid compounds, as described in U.S. Patent Application No. 520,215;

fired products of monovalent or divalent metal salts of hexafluoro silicic acid, hexafluoro titanic acid and hexafluoro zirconic acid;

NaX', in which X' is at least one element selected from the group consisting of Cl, Br and I, as described in Japanese Patent Provisional Publication No. 59(1984)-56479;

transition metals such as V, Cr, Mn, Fe, Co and Ni;

$M^IX'$, $M'^{II}X"_2$, $M^{III}X"'_3$ and A, in which $M^I$ is at least one alkali metal selected from the group consisting of Li, Na, K, Rb and Cs; $M'^{II}$ is at least one divalent metal selected from the group consisting of Be and Mg; $M^{III}$ is at least one trivalent metal selected from the group consisting of Al, Ga, In and Tl; A is metal oxide; and each of X' , X" and X" is at least one halogen selected from the group consisting of F, Cl, Br and I;

$M^IX'$, in which $M^I$ is at least one alkali metal selected from the group consisting of Rb and Cs; and X' is at least one halogen selected from the group consisting of F, Cl, Br and I;

$M^{II}X'_2 \cdot M^{II}X"_2$, in which $M^{II}$ is at least one alkaline earth metal selected from the group consisting of Ba, Sr and Ca; and each of X' and X" is at least one halogen selected from the group consisting of Cl, Br and I, and $X \neq X'$; and

$LnX"_3$, in which Ln is at least one rare earth element selected from the group consisting of Sc, Y, La, Ce, Pr, Nd, Pm, Sm, Gd, Tb, by, Ho, Er, Tm, Yb and Lu; and X" is at least one halogen selected from the group consisting of F, Cl, Br and I;

and

(2) a bismuth activated alkali metal halide phosphor having the formula: $M^IX{:}xBi$, in which $M^I$ is at least one alkali metal selected from the group consisting of Rb and Cs; X is at least one halogen selected from the group consisting of Cl, Br and I; and x is a number satisfying the condition of $0 < x \leq 0.2$.

The above-described stimulable phosphors are given by no means to restrict the iodinecontaining stimulable phosphor employable in the present invention.

Any other divalent europium activated alkaline earth metal fluorohalide phosphor or bismuth activated alkali metal halide phosphor can be also employed, provided that the phosphor contains iodine as a phosphor component and gives stimulated emission when excited with stimulating rays after exposure to a radiation.

The compound having an epoxy group employable in the panel of the invention has at least one epoxy group

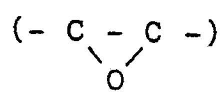

in a molecule.

The epoxy group-containing compound may be a monomer or a polymer. Examples of the monomer include 1,2-epoxy-propane and 1,2-epoxybutane. Examples of the polymer include a bisphenol A-type epoxy resin having the formula:

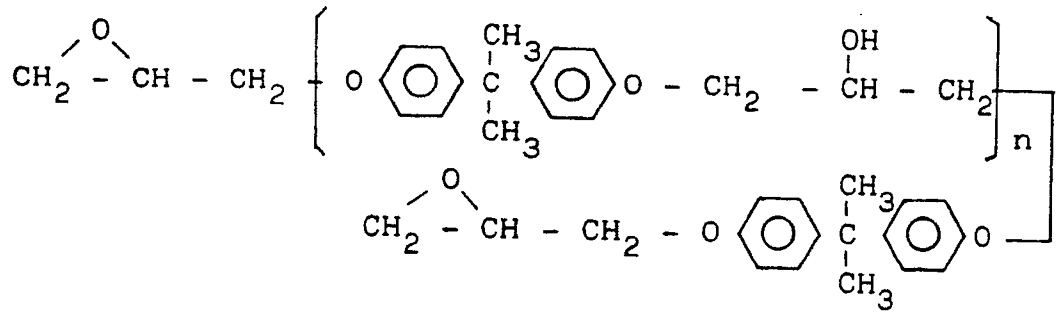

The epoxy group-containing compound is preferably a polymer, because the compound does not only serve as an additive for the prevention of yellowing but also as a binder. All of the binder may be the epoxy group-containing compound.

Representative examples of the phosphite (phosphorus chelate) employable in the panel of the invention include a compound having the formula (1) and a compound having the formula (II):

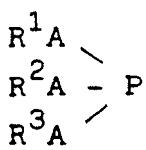

(I)

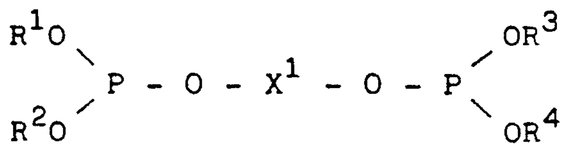

(II)

in which A is an oxygen atom or a sulfur atom; each of $R^1$, $R^2$, $R^3$ and $R^4$ is a hydrogen atom, an alkyl group or an aryl group, and $R^1$, $R^2$, $R^3$ and $R^4$ are the same or different from each other; and $X^1$ is a group comprising a carbon atom and/or an oxygen atom and/or a hydrogen atom.

Examples of thé preferred phosphite include:

(1) triphenyl phosphite:

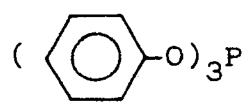

(2) diphenyldecyl phosphite:

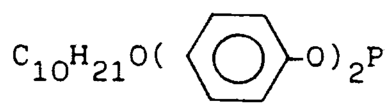

(3) didecylphenyl phosphite:

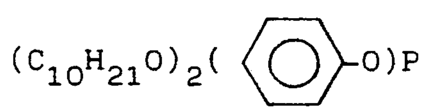

(4) tridecyl phosphite: $(C_{10}H_{21}O)_3P$

(5) trioctyl phosphite: $(C_8H_{17}O)_3P$

(6) tridodecyl phosphite: $(C_{12}H_{25}O)_3P$
(7) trioctadecyl phosphite: $(C_{18}H_{37}O)_3P$
(8) trinonylphenyl phosphite:

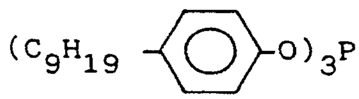

(9) tridodecyltrithio phosphite: $(C_{12}H_{25}S)_3P$

The above-mentioned compounds having the formula (I) and the formula (II) may be employed singly or in combination.

Examples of the organotin compound employable in the panel of the invention include a compound having the formula (III):

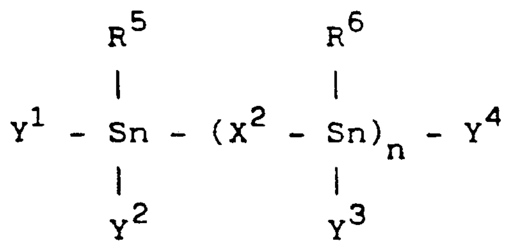
(III)

in which each of $R^5$ and $R^6$ is a hydrogen atom, an alkyl group or an aryl group, and $R^5$ and $R^6$ are the same or different from each other; each of $Y^1$, $Y^2$, $Y^3$ and $Y^4$ is an alkyl group, an aryl group, a fatty acid, a fatty acid derivative, mercaptan or a mercaptan carboxylic acid, and $Y^1$, $Y^2$, $Y^3$ and $Y^4$ are the same or different from each other; $X^2$ is an oxygen atom, a sulfur atom or a maleic acid; and n is O or an integer of not less than 1.

The organotin compound is liable to be relatively stabilized in such a state that a portion of organic ligands bound to tin substituted by halogen, etc. In the formula (III), at least one ligand of $Y^1$ to $Y^4$ is substituted by iodine to make the compound stable.

Examples of the preferred organotin compound include dioctyltin mercaptide, monobutyltin trimethylmaleate, monobutyltin trioctylmaleate, dibutyltin dilaurate, dibutyltin laurate methylmaleate, dibutyltin dioleilmaleate, dibutyltin dimethylmaleate, dibutyltin maleate, dibutyltin methoxymethylmaleate, a mixture of dibutyltin dimaleate and dibutyltin dimethylmaleate, dibutyltin dioctylmaleate, dibutyltin dioctylthioglycolate, dibutyltin dilaurylmercaptide, tribenzyltin octylmaleate and tribenzyltin trimethylmaleate.

Examples of the metal salt of organic acid employable in the panel of the invention include a compound having the formula (IV):

$(R^7COO)_mM$ (IV)

in which $R^7$ is an alkyl group or an aryl group having 1 - 20 carbon atoms, which may have at least one substituent; M is calcium, zinc, cadmium or barium; and m is a positive integer.

It is presumed that a portion of organic acids in the metal salt of organic acid having the formula (IV), is substituted by iodine to form $(R^7COO)_{m-1}MI$. A tin salt of organic acid is not included in the metal salt of organic acid employable in the panel of the invention.

Examples of the organic acid in the metal salt of organic acid include octylic acid, lauric acid, stearic acid, oleic acid, ricinoleic acid, naphthenic acid, 2-ethylhexanoic acid, resin acid, synthetic carboxylic acid, benzoic acid, salicylic acid and organic phosphinous acid. The organic acid may be phenol or alkylphenol.

Examples of the metal salt of organic acid include a so-called metallic soap such as barium stearate, barium laurate, barium ricinoleate, barium naphthenate, barium 2-ethylhexanoate, calcium stearate, calcium laurate, calcium ricinoleate, zinc stearate, zinc laurate, zinc ricinoleate and zinc 2-ethylhexanoate.

These phosphites, organotin compounds and metal salts of organic acids can be employed singly or in combination of two or more compounds.

The above-mentioned epoxy group-containing compound and at least one of the compound selected from the group consisting of phosphites, organotin compounds and metal salts of organic acids may be

incorporated singly into the phosphor layer. Otherwise, both of the compounds may be appropriately incorporated into the phosphor layer.

The iodine liberated from the stimulable phosphor can be effectively trapped by these compounds, $I_2$ molecules are not produced and hence, the phosphor layer is free from yellowing.

Examples of the binder to be contained in the phosphor layer include: natural polymers such as proteins (e.g. gelatin), polysaccharides (e.g. dextran) and gum arabic; and synthetic polymers such as polyvinyl butyral, polyvinyl acetate, nitrocellulose, ethylcellulose, vinylidene chloride-vinyl chloride copolymer, polyalkyl (meth) acrylate, vinyl chloride-vinyl acetate copolymer, polyurethane, cellulose acetate butyrate, polyvinyl alcohol, and linear polyester. Particularly preferred are nitrocellulose, linear polyester, polyalkyl (meth)acrylate, a mixture of nitrocellulose and linear polyester, and a mixture of nitrocellulose and polyalkyl (meth)acrylate. These binders may be crosslinked with a crosslinking agent.

The phosphor layer can be formed on the support, for instance, by the following procedure.

In the first place, the above-described stimulable phosphor containing iodine, compound for the prevention of yellowing and binder are added to an appropriate solvent, and then they are well mixed to prepare a coating dispersion comprising the phosphor particles and the compound homogeneously dispersed in the binder solution.

Examples of the solvent employable in the preparation of the coating dispersion include lower alcohols such as methanol, ethanol, 1-propanol, 2-propanol and nbutanol; chlorinated hydrocarbons such as methylene chloride and ethylene chloride; ketones such as acetone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether and ethylene glycol monomethyl ether; and mixtures of the abovementioned compounds.

The ratio between the binder and the stimulable phosphor in the coating dispersion (the ratio between the epoxy group containing compound and the phosphor in the case that all of the binder is said compound) may be determined according to the characteristics of the aimed radiation image storage panel, the nature of the phosphor employed, and the amount of the epoxy group-containing compound. Generally, the ratio therebetween is within the range of from 1 : 1 to 1 : 100 (binder : phosphor, by weight), preferably from 1 : 8 to 1 : 40.

The amount of the compound having an epoxy group varies depending upon the nature and amount of the employed stimulable phosphor or the kind of the binder, and the amount thereof is generally in the range of from 0.001 to 10 % by weight, preferably from 0.03 to 3 % by weight, of the stimulable phosphor. When the amount is less than 0.001 % by weight, there can be hardly obtained the yellowing-preventing effect. When the amount exceeds 10 % by weight, even if all of the binder is the epoxy group-containing compound, unfavorable effects are given to the emission characteristics of the phosphor or various properties of the resulting panel such as flexibility and endurance, although the yellowing-preventing effect can be obtained.

The amount of the phosphite, organotin compound and/or metal salt of organic acid also varies depending upon the nature and amount of the employed stimulable phosphor or the kind of the binder, and generally is in the range of from 0.0001 to 3 % by weight, preferably in the range of from 0.003 to 0.3 % by weight, of the stimulable phosphor.

The coating dispersion may contain a dispersing agent to improve the dispersibility of the phosphor particles therein, and may contain a variety of additives such as a plasticizer for increasing the bonding between the binder and the phosphor particles in the phosphor layer. Examples of the dispersing agent include phthalic acid, stearic acid, caproic acid and a hydrophobic surface active agent. Examples of the plasticizer include phosphates such as triphenyl phosphate, tricresyl phosphate and diphenyl phosphate; phthalates such as diethyl phthalate and dimethoxyethyl phthalate; glycolates such as ethylphthalyl ethyl glycolate and butylphthalyl butyl glycolate; and polyesters of polyethylene glycols with aliphatic dicarboxylic acids such as polyester of triethylene glycol with adipic acid and polyester of diethylene glycol with succinic acid.

The coating dispersion prepared as described above is evenly applied to the surface of the support to form a layer of the coating dispersion. The coating procedure can be carried out by a conventional method such as a method using a doctor blade, a roll coater or a knife coater. After applying the coating dispersion to the support, the coating dispersion is then heated slowly to dryness so as to complete the formation of a phosphor layer. The thickness of the phosphor layer varies depending upon the characteristics of the aimed radiation image storage panel, the nature of the phosphor and the ratio between the binder and the phosphor. Generally, the thickness of the phosphor layer is within the range of from 20 µm to 1 mm, and preferably from 50 to 500 µm.

The phosphor layer can be provided on the support by the methods other than that given above. For

instance, the phosphor layer is initially prepared on a sheet (false support) such as a glass plate, metal plate or plastic sheet using the aforementioned coating dispersion and then the thus prepared phosphor layer is superposed on the genuine support by pressing or using an adhesive agent.

On the surface of the phosphor layer not facing the support, a transparent protective film may be provided to protect the phosphor layer from physical and chemical deterioration.

The protective film can be provided on the phosphor layer by coating the surface of the phosphor layer with a solution of a transparent polymer such as a cellulose derivative (e.g. cellulose acetate or nitrocellulose), or a synthetic polymer (e.g. polymethyl methacrylate, polyvinyl butyral, polyvinyl formal, polycarbonate, polyvinyl acetate, or vinyl chloride-vinyl acetate copolymer), and drying the coated solution.

Otherwise, the transparent film can be provided on the phosphor layer by beforehand preparing it from a polymer such as polyethylene terephthalate, polyethylene, polyvinylidene chloride or polyamide, followed by placing and fixing (laminating) it on the phosphor layer with an appropriate adhesive agent. The transparent film can be prepared by coating a sheet such as a glass plate, metal plate or plastic sheet with a solution of the polymer and drying. Examples of the adhesive agent include a polyacrylic resin, a polyester resin, a polyurethane resin, a polyvinyl acetate resin and ethylene-vinyl acetate copolymers. The adhesive agent is by no means restricted to these resins, and for instance, other known resins which are conventionally used as an adhesive agent can be employed. The adhesive agent is used as a solution prepared by adding it to an appropriate solvent. The solvents employable in the solution of the polymer and in the solution of the adhesive agent can be selected from the aforementioned solvents.

The transparent protective film preferably has a thickness in the range of from approximately 0.1 to 20 $\mu m$. In the case of using the adhesive agent, the thickness of the adhesive layer is generally in the range of from 0.1 to 10 $\mu m$.

Alternatively, the protective film may be formed together with the phosphor layer by a simultaneous superposition-coating method. The coating dipersion for the phosphor layer and the coating solution for the protective film are evenly applied to the surface of the support in simultaneous stage and in the superposed form, in such a manner that the coating dispersion is arranged on the support side, to form superposed layers of the coating dispersion and the coating solution, followed by heating to dryness. The applying procedure is conducted by using for example a two-hopper type coating apparatus. Otherwise, after the coating dispersion for the phosphor layer is applied to the support, the coating solution for the protective film is immediately applied to the layer of the coating dispersion, and then both the coated layers are heated to dryness to form the phosphor layer and the protective film simultaneously.

The binder in the coating dispersion for the phosphor layer and the polymer in the coating solution for the protective film may be compatible or incompatible with each other. In the case of compatible ones, there is not an interface between the resulting phosphor layer and protective film, that is, a single layer comprising a part containing the stimulable phosphor and another part substantially not containing it. The solvents in both the coating dispersion and the coating solution may be the same or different from each other, and solvents miscible with each other are preferable from the viewpoint of drying the coated layers at the same speed. The ratio between the amount of the coating dispersion and the amount of the coating solution varies depending on the viscosity thereof, the ratio between the binder and the phosphor, and generally is within the range of from 100 : 1 to 1 : 1, in volume, preferably from 10 : 1 to 1 : 1. Examples of the polymer material employable in the coating solution for the protective film further include melamine and a phenol resin.

The protective film may also contain the compound for the prevention of yellowing by adding it to the solution of the polymer. The compound can be selected from the above-mentioned compounds employable in the phosphor layer and may be the same or different from the compound contained therein. The amount of the compound contained in the protective film varies depending on the nature and amount of the stimulable phosphor and the kind of the polymer. In the case of the epoxy group-containing compound, the amount thereof is generally in the range of from 0.03 to 100 % by weight of the polymer, preferably from 1 to 30 % by weight and in the case of the phosphite, organotin compound or metal salt of organic acid, generally in the range of from 0.003 to 30 % by weight of the polymer, preferably from 0.01 to 1 % by weight.

Iodine liberated from the iodine-containing stimulable phophor in the phosphor layer is trapped by said compound, not forming $I_2$ molecules in the protective film, even when the solution of the polymer is in contact with the phosphor during the coating procedure for the preparation of the protective film, so that the protective film is free from yellowing.

When the protective film is formed by the lamination method, the adhesive layer may contain the compound for the prevention of yellowing by adding it to the solution of the adhesive agent. The compound can be selected from the above-mentioned compounds employable in the phosphor layer and may be the

same or different from the compound contained therein. The amount of the compound contained in the adhesive layer varies depending on the nature and amount of the stimulable phosphor and the kind of the adhesive agent. In the case of the epoxy group-containing compound, the amount thereof is generally in the range of from 0.03 to 100 % by weight of the adhesive agent, preferably from 1 to 30 % by weight and in the case of the phosphite, organotin compound or metal salt of organic acid, generally in the range of from 0.003 to 30 % by weight of the adhesive agent, preferably from 0.01 to 1 % by weight.

Iodine liberated from the iodine-containing stimulable phophor in the phosphor layer is trapped by said compound, not forming $I_2$ molecules in the adhesive layer, even when the softened adhesive agent is in contact with the phosphor during the lamination procedure with heating or under severe conditions of a temperature and a humidity, so that the adhesive layer is free from yellowing.

The radiation image storage panel of the invention may be colored with a colorant to enhance the sharpness of the resulting image, as described in U.S. Patent No. 4,394,581. For the same purpose, the radiation image storage panel of the invention may contain a white powder in the phosphor layer, as described in U.S. Patent No. 4,350,893.

The radiation image storage panel may be covered on the side surfaces thereof with a polymer material to improve the mechanical strength such as the resistance to shock and the resistance to bending.

In the present specification, the term "side surfaces" includes those at the front and back of the panel and those at both sides thereof, viewed along the direction in which the panel is transferred. The term "covering the side surfaces of the panel" means that one or more side surfaces (opportunely, all the side surfaces) of the panel are covered.

As polymer material, polymers generally known as a covering material can be employed. Examples of the polymer material include polyurethane, an acrylic resin, a mixture of polyurethane and/or an acrylic resin with other polymers (polymers for blend) such as a vinyl chloride-vinyl acetate copolymer; a linear polyester and a mixture of a linear polyester and a vinyl chloride-vinyl acetate copolymer.

The linear polyester is, for example, a polycondensation reaction product of a dibasic acid with a dioxy compound or a polycondensation reaction product of an oxy acid. Examples of the dibasic acid include succinic acid, glutaric acid, adipic acid, terephthalic acid and isophthalic acid. Examples of the dioxy compound include ethylene glycol, 1,3-propanediol, 1,4-butanediol and 1,4-cyclohexane dimethanol. Examples of the oxy acid include glycolic acid, lactic acid, malic acid, tartaric acid, citric acid, salicylic acid, benzoic acid, gallic acid, mandelic acid and tropic acid. The average molecular weight of the linear polyester is preferably in the range of from 13,000 to 22,000.

In a vinyl chloride-vinyl acetate copolymer, the ratio therebetween is decided considering the physical properties such as adhesion and rigidity. The preferred ratio therebetween is in the range of from 75 : 25 to 97 : 3 (vinyl chloride : vinyl acetate, by weight). The molecular weight of the vinyl chloride-vinyl acetate copolymer is preferably in the range of from 10,000 to 25,000.

The mixture ratio between the linear polyester and the vinyl chloride-vinyl acetate copolymer varies depending upon the facilitation of transfer of the panel in the transfer system. The preferred mixing ratio is in the range of from 9 : 1 to 4 : 6 (linear polyester : vinyl chloride-vinyl acetate copolymer, by weight).

The covering is carried out by dissolving the above-mentioned polymer in an appropriate solvent to prepare a solution (covering solution) of the polymer, coating the side surfaces of the panel therewith followed by drying. The solvents can be selected from the aforementioned solvents employable in the phosphor layer. The coating procedure can be done by a conventional method such as a spray coating method or a method using a doctor blade, a roll coater or a knife coater. Otherwise, the covering may be carried out by beforehand forming the longitudinal thin film (tape) and fixing the tape on the side surfaces of the panel with an adhesive agent.

The thickness of the polymer film varies depending on the transferability of the resulting panel and the degree of wastage of the polymer film in the transfer system. Generally, the thickness of the polymer film is in the range of from 2 to 100 $\mu m$, and preferably from 10 to 50 $\mu m$.

The polymer film for covering may also contain the compound for the prevention of yellowing by adding same to the solution of the polymer. The compound can be selected from the aforementioned compounds employable in the phosphor layer and may be the same or different from the compound contained therein. Among said compounds, the compound having an epoxy group is preferred and more preferred is the bisphenol A-type epoxy resin. The amount of the compound contained in the polymer film varies depending on the nature and amount of the stimulable phosphor and the kind of the polymer. In the case of the epoxy group-containing compound, the amount thereof is generally in the range of from 0.1 to 100 % by weight of the polymer, preferably from 5 to 100 % by weight and in the case of the phosphite, organotin compound or metal salt of organic acid, generally in the range of from 0.01 to 10 % by weight of the polymer, preferably from 0.1 to 5 % by weight.

Iodine liberated from the stimulable phophor in the phosphor layer is trapped by said compound, not forming $I_2$ molecules in the polymer film, even when the solution of the polymer is in contact with the phosphor during the coating procedure for the covering, so that the polymer film is free from yellowing.

Thus, the incorporation of the compound for the prevention of yellowing into each part (layer) of the panel can prevent the panel from being colored yellow.

For further improvement in the transferability and the resistance to damage of the panel, the panel may be chamfered on the edges thereof and then covered on the side surfaces thereof including the chamfered edge with the polymer material.

The chamfering is preferably applied to the front edge of the panel (viewed along the transfer direction thereof) on the support side for facilitating transfer of the panel. It is more preferable to chamfer all edges of the panel on the support side for preventing the front surface of the panel (the phosphor layer-side surface or the protective film-side surface) from damage. It is further preferable to chamfer the edges on the phosphor layer-side as well as on the support side, so as to more improve both the transferability and the resistance to damage of the panel. The so chamfered edge may have a flat face or a curved face.

The chamfering of the edge on the support side of the panel should be preferably done in a depth within the range of from 1/50 to 1/1 against the thickness of the support, measured in the direction vertical to the panel. Likewise, the chamfering of the edge on the phosphor layer-side (including a protective film when the protective film is provided thereon) of the panel should be preferably done in a depth within the range of from 1/50 to 1/1 against the thickness of the phosphor layer. When the edge on the support side and the edge on the phosphor layer-side opposite to said edge are to be chamfered, the depth of at least one chamfered space is preferably adjusted to a level of less than 1/1 (against the same as above) so that the side chamfered at its both edges might not form a sharp edge.

The following examples further illustrate the present invention.

Example 1

To 18 g of methyl ethyl ketone were added 120 g of a particulate divalent europium activated barium fluorobromide ($BaFBr_{0.85}I_{0.15}:0.001Eu^{2+}$) stimulable phosphor, 24 g of a methyl ethyl ketone solution of acrylic resin (solid content: 10 wt.%), 6 g of a methyl ethyl ketone solution of nitrocellulose (solid content: 10 wt.%) and 2 g of a methyl ethyl ketone solution of bisphenol A-type epoxy resin having an average molecular weight of 900 (solid content: 50 wt.%). The mixture was sufficiently stirred by means of a propeller agitator to obtain a homogeneous coating dispersion having a mixing ratio of 1 : 40 (binder : phosphor, by weight) and a viscosity of 2,5-3,0 Pa•s (25 - 30 PS) (at 25°C).

The coating dispersion was applied evenly to a polyethylene terephthalate sheet containing carbon black (support, thickness: 250 μm) placed horizontally on a glass plate. The application of the coating dispersion was carried out using a doctor blade with varying a diameter of the aperture of the doctor blade. After the coating was complete, the support having a layer of the coating dispersion was placed in an oven and heated at a temperature gradually rising from 25 to 100°C. Thus, a phosphor layer having a thickness in the range of 150 to 500 μm was formed on the support.

On the phosphor layer was placed a transparent polyethylene terephthalate film (thickness: 12 μm; provided with a polyester adhesive layer on one surface) to combine the transparent film and the phosphor layer with the adhesive layer.

Thus, a radiation image storage panel consisting essentially of a support, a phosphor layer and a transparent protective film was prepared.

Comparison Example 1

The procedure of Example 1 was repeated except for not using the bisphenol A-type epoxy resin solution and using 20 g of methyl ethyl ketone in the preparation of the coating dispersion, to prepare a radiation image storage panel consisting essentially of a support, a phosphor layer and a transparent protective film.

The radiation image storage panels obtained in Example 1 and Comparison Example 1 were exposed to X-rays at 80 kVp and then excited with a He-Ne laser beam (wavelength: 632.8 nm) to measure the sensitivity. The results are shown in Fig. 1.

Fig. 1 is a graph in which the thickness of the phosphor layer is plotted on the abscissa and the relative sensitivity is plotted on the ordinate. In Fig. 1,

Curve 1: panel containing an epoxy group-containing compound (Example 1), and
Curve 2: panel not containing an epoxy group-containing compound (Comparison Example 1).

As is evident from Fig. 1, the radiation image storage panel wherein the epoxy-group containing compound is contained in the phosphor layer according to the invention (Example 1) was remarkably improved in the sensitivity, as compared with the known radiation image storage panel not containing the epoxy-group containing compound (Comparison Example 1). The phosphor layer of the known panel extremely yellowed, and the sensitivity was enhanced only a little even when the thickness thereof was made larger. On the contrary, no yellowing was shown in the phosphor layer of the panel of the invention, and the sensitivity increased in proportion to the thickness thereof.

Example 2

The procedure of Example 1 was repeated except for using 120 g of a particulate bismuth activated cesium iodide (CsI:-0.001Bi) phosphor as a stimulable phosphor and using 1 g of 1,2-epoxypropane instead of the bisphenol A-type epoxy resin solution, to form a phosphor layer having a thickness of 250 μm on the support.

On the phosphor layer was formed a transparent protective film in the same manner as described in Example 1, to prepare a radiation image storage panel consisting essentially of a support, a phosphor layer and a transparent protective film.

Comparison Example 2

The procedure of Example 2 was repeated except for not adding 1,2-epoxypropane to the coating dispersion, to prepare a radiation image storage panel consisting essentially of a support, a phosphor layer and a transparent protective film.

The sensitivity of the radiation image storage panels obtained in Example 2 and Comparison Example 2 was measured in the same manner as described above. The results are set forth in Table 1. The sensitivity of the panel was expressed by a relative value on the basis of that of Example 2 being 100.

Table 1

| | Example 2 | Com. Example 2 |
|---|---|---|
| Relative Sensitivity | 100 | 15 |

Example 3

To 18 g of methyl ethyl ketone were added 120 g of a particulate divalent europium activated barium fluorobromide ($BaFBr_{0.85}I_{0.15}:0.001Eu^{2+}$) stimulable phosphor, 24 g of a methyl ethyl ketone solution of acrylic resin (solid content: 10 wt.% ), 6 g of a methyl ethyl ketone solution of nitrocellulose (solid content: 10 wt.%) and 0.04 g of a methyl ethyl ketone solution of diphenyldecyl phosphite having an average molecular weight of 374 (solid content: 50 wt.%). The mixture was sufficiently stirred by means of a propeller agitator to obtain a homogeneous coating dispersion having a mixing ratio of 1 : 40 (binder : phosphor, by weight) and a viscosity of 2,5-3,0 Pa•s (25 - 30 PS) (at 25 °C).

The coating dispersion was applied evenly to a polyethylene terephthalate sheet containing carbon black (support, thickness: 250 μm) placed horizontally on a glass plate. The application of the coating dispersion was carried out using a doctor blade with varying the diameter of the aperture of the doctor blade. After the coating was complete, the support having a layer of the coating dispersion was placed in an oven and heated at a temperature gradually rising from 25 to 100 °C. Thus, a phosphor layer having a thickness in the range of 200 to 500 μm was formed on the support.

On the phosphor layer was placed a transparent polyethylene terephthalate film (thickness: 12 µm; provided with a polyester adhesive layer on one surface) to combine the transparent film and the phosphor layer with the adhesive layer.

Thus, a radiation image storage panel consisting essentially of a support, a phosphor layer and a transparent protective film was prepared.

Comparison Example 3

The procedure of Example 3 was repeated except for not using the diphenyldecyl phosphite solution and using 20 g of methyl ethyl ketone in the preparation of the coating dispersion, to prepare a radiation image storage panel consisting essentially of a support, a phosphor layer and a transparent protective film.

The sensitivity of the radiation image storage panels obtained in Example 3 and Comparison Example 3 was measured in the same manner as described hereinbefore. The results are shown in Fig. 2.

Fig. 2 is a graph in which the thickness of the phosphor layer is plotted on the abscissa and the relative sensitivity is plotted on the ordinate. In Fig. 2,

Curve 1: panel containing a phosphite (Example 4), and

Curve 2: panel not containing a phosphite (Comparison Example 4).

As is evident from Fig. 2, the radiation image storage panel wherein a phosphite is contained in the phosphor layer according to the invention (Example 4) was remarkably improved in the sensitivity, as compared with the known radiation image storage panel not containing a phosphite (Comparison Example 4). The phosphor layer of the known panel extremely yellowed, and the sensitivity was enhanced only a little even when the thickness thereof was made larger. On the contrary, no yellowing was shown in the phosphor layer of the panel of the invention, and the sensitivity increased in proportion to the thickness thereof.

Example 4

The procedure of Example 3 was repeated except for using 120 g of a particulate bismuth activated cesium iodide (CsI:0.001Bi) phosphor as a stimulable phosphor and using 0.04 g of dioctyltin mercaptide instead of the diphenyldecyl phosphite, to form a phosphor layer having a thickness of 250 µm on the support.

On the phosphor layer was formed a transparent protective film in the same manner as described in Example 4, to prepare a radiation image storage panel consisting essentially of a support, a phosphor layer and a transparent protective film.

Comparison Example 4

The procedure of Example 4 was repeated except for not adding dioctyltin mercaptide to the coating dispersion, to prepare a radiation image storage panel consisting essentially of a support, a phosphor layer and a transparent protective film.

The sensitivity of the radiation image storage panels obtained in Example 4 and Comparison Example 4 was measured in the same manner as described above. The results are set forth in Table 2. The sensitivity of the panel was expressed by a relative value on the basis of that of Example 4 being 100.

Table 2

| | Example 4 | Com. Example 4 |
|---|---|---|
| Relative Sensitivity | 100 | 30 |

Example 5

The procedure of Example 3 was repeated except for further adding 2 g of a methyl ethyl keton solution of bisphenol A-type epoxy resin having an average molecular weight of 900 (solid content: 50 wt.%) to the coating dispersion, to form a phosphor layer having a thickness of 400 µm on the support.

On the phosphor layer was formed a transparent protective film in the same manner as described in Example 3, to prepare a radiation image storage panel consisting essentially of a support, a phosphor layer and a transparent protective film.

The radiation image storage panels obtained in Example 5 as well as Examples 1 and 3 were evaluated on the deterioration characteristics according to the following test.

The sensitivity of the panel was measured in the same manner as described above. After the panel was allowed to stand at a temperature of 60°C and at a humidity of 80 %RH for 7 days, the sensitivity of the panel was measured again.

The results are set forth in Table 3. The sensitivity of each panel was expressed by a relative value on the basis of that of each panel before the standing being 100.

Table 3

| | Relative Sensitivity | |
|---|---|---|
| | Before Standing | After Standing |
| Example 1 | 100 | 85 |
| Example 3 | 100 | 80 |
| Example 5 | 100 | 90 |

As is evident from Table 3, the radiation image storage panel wherein both the phosphite and epoxy groupcontaining compound were contained in the phosphor layer according to the invention (Example 5) kept higher sensitivity than the radiation image storage panel containing only the epoxy group-containing compound (Example 1) and than the radiation image storage panel containing only the phosphite (Example 3).

Example 6

To 300 g of zirconium oxide (white pigment) were added 105 g of a linear polyester resin, 300 g of a methyl ethyl ketone solution of nitrocellulose having a nitration degree of 11.5 % (solid content: 10 wt.%), 15 g of a bisphenol A-type epoxy resin having an average molecular weight of 800 and further methyl ethyl ketone. The mixture was sufficiently stirred by means of a propeller agitator to obtain a homogeneous dispersion of the white pigment (coating dispersion I) having a mixing ratio of 1 : 2 (binder containing epoxy resin : white pigment, by weight) and a viscosity of 2,5-3,5 Pa•s (25 - 35 PS) (at 25° C).

To 300 g of a particulate divalent europium activated barium fluorobromide ($BaFBr_{0.85}I_{0.15}:0.001Eu^{2+}$) stimulable phosphor were added 10.5 g of the linear polyester resin, 30 g of the nitrocellulose solution (solid content: 10 wt.%), 6 g of a methyl ethyl ketone solution of nitrocellulose (solid content: 10 wt.%), 1.5 g of a bisphenol A-type epoxy resin having an average molecular weight of 500 and further methyl ethyl ketone. The mixture was sufficiently stirred by means of a propeller agitator to obtain a homogeneous dispersion of phosphor (coating dispersion II) having a mixing ratio of 1 : 20 (binder : phosphor, by weight) and a viscosity of 2,5-3,5 Pa•s (25 - 35 PS) (at 25° C).

The coating dispersion I was initially applied evenly to a polyethylene terephthalate sheet containing carbon black (support, thickness: 250 µm) placed horizontally on a glass plate by using a doctor blade. Immediately, the coating dispersion II was applied to a layer of the coating dispersion I in the same manner as quickly as the solvent of the coating dispersion I was not removed. After the coating was complete, the support having superposed layers of the coating dispersions I and II was placed in an oven and heated at a temperature gradually rising from 25 to 100° C, to simultaneously form a light-reflecting layer having a thickness of 30 µm and a phosphor layer having a thickness of 250 on the support.

It was confirmed from a sectional photograph of the light-reflecting layer and the phosphor layer, which was obtained by using a scanning electron microscope, that there was no interface therebetween.

On the phosphor layer was placed a transparent polyethylene terephthalate film (thickness: 10 µm; provided with a polyester adhesive layer on one surface) to combine the transparent film and the phosphor layer with the adhesive layer.

Thus, a radiation image storage panel consisting essentially of a support, a light-reflecting layer, a phosphor layer and a transparent protective film was prepared.

Comparison Example 5

The procedure of Example 6 was repeated except for not using the epoxy resin and using 120 g of the linear polyester resin in the preparation of the coating dispersion I wherein the ratio of binder to white pigment was 1 : 2, by weight, to prepare a radiation image storage panel consisting essentially of a support, a lightreflecting layer, a phosphor layer and a transparent protective film.

Example 7

To 214 g of particulate barium fluorobromide (BaFBr, which contained 90 % of particles having a diameter ranging from 1 - 5 µm) were added 25.7 g (solid content) of a soft acrylic resin, 64 g of a methyl ethyl ketone solution of nitrocellulose having a nitration degree of 11.5 % (solid content: 10 wt.%), 10.7 g of a bisphenol A-type epoxy resin having an average molecular weight of 500 and further methyl ethyl ketone. The mixture was sufficiently stirred by means of a propeller agitator to obtain a homogeneous dispersion (coating dispersion I) having a mixing ratio of 1 : 5 (binder containing epoxy resin : BaFBr, by weight) and a viscosity of 2,5-3,5 Pa•s (25 - 35 PS) (at 25° C).

To 300 g of a particulate divalent europium activated barium fluorobromide ($BaFBr_{0.8}I_{0.2}:0.001Eu^{2+}$) stimulable phosphor were added 7.0 g (solid content) of the soft acrylic resin, 15 g of the nitrocellulose solution (solid content: 10 wt.%), 1.5 g of the bisphenol A-type epoxy resin and further methyl ethyl ketone. The mixture was sufficiently stirred by means of a propeller agitator to obtain a homogeneous dispersion of phosphor (coating dispersion II) having a mixing ratio of 1 : 30 (binder : phosphor, by weight) and a viscosity of 2,5-3,5 Pa•s (25 - 35 PS) (at 25° C).

Independently 90 g of (solid content) of the soft acrylic resin, 50 g of the nitrocellulose solution (solid content: 10 wt.%) and further methyl ethyl ketone were sufficiently mixed by means of a propeller agitator, to obtain a coating dispersion for a subbing layer having a viscosity of 0,3-0,6 Pa•s (3 - 6 PS) (at 25° C).

The coating dispersion was applied evenly to a polyethylene terephthalate sheet containing carbon black (support, thickness: 300 µm) placed horizontally on a glass plate by using a doctor blade. Subsequently, the support having a layer of the coating dispersion was heated at a temperature gradually

rising from 25 to 100 °C, to form a subbing layer on the support.

Then the coating dispersion I was initially applied evenly to the subbing layer provided on the support placed horizontally on the glass plate by using the doctor blade. Immediately the coating dispersion II was applied onto a layer of the coating dispersion I in the same manner as quickly as the solvent of the coating dispersion I was not removed. After the coating was complete, the support having superposed layers of the coating dispersions I and II was placed in an oven and heated at a temperature gradually rising from 25 to 100 °C to simultaneously form a light-reflecting layer having a thickness of 60 µm and a phosphor layer having a thickness of 280 µm on the subbing layer.

On the phosphor layer was placed a transparent polyethylene terephthalate film (thickness: 10 µm; provided with a polyester adhesive layer on one surface) to combine the transparent film and the phosphor layer with the adhesive layer.

Thus, a radiation image storage panel consisting essentially of a support, a subbing layer, a light-reflecting layer, a phosphor layer and a transparent protective film was prepared.

Comparison Example 6

The procedure of Example 7 was repeated except for not using the epoxy resin and using 36.4 g (solid content) of the soft acrylic resin in the preparation of the coating dispersion I wherein the ratio of binder to BaFBr was 1 : 5, by weight, to prepare a radiation image storage panel consisting essentially of a support, a subbing layer, a light-reflecting layer, a phosphor layer and a transparent protective film.

The sensitivity of the radiation image storage panels obtained in Examples 6 and 7 and Comparison Examples 5 and 6 was measured in the same manner as described hereinbefore. The results are set forth in Table 4.

Table 4

| | Example 6 | Com. Example 5 |
|---|---|---|
| Relative Sensitivity | 100 | 55 |
| | Example 7 | Com. Example 6 |
| Relative Sensitivity | 100 | 64 |

As is evident from Table 4, the light-reflecting layers, each of which contained the epoxy group-containing compound, of the radiation image storage panels of the invention (Examples 6 and 7) were prevented from yellowing, and said panels were remarkably improved in the sensitivity as compared with the radiation image storage panels wherein the epoxy group-containing compound was not contained in the light-reflecting layers (Comparison Examples 5 and 6), respectively.

Example 8

A polyacrylic resin (trade name: Dianal BR107, available from Mitsubishi Rayon Co., Ltd.), aliphatic

isocyanate (crosslinking agent, trade name: Desmodul Z4370, available from Sumitomo Bayer Urethane Co., Ltd.), nirocellulose (trade name: RS120, available from Daicel Co., Ltd.), silicon dioxide (particle diameter: 2 - 3 µm) and a bisphenol A-type epoxy resin having an avarage molecular weight of 800 were added to methyl ethyl ketone in the following composition, to prepare a coating dispersion for a subbing layer having a viscosity of 0,25-0,6 Pa•s (2.5 - 6 PS) (at 25° C).

Composition of Coating Dispersion for Subbing Layer

| | |
|---|---|
| Polyacrylic resin | 100 g |
| Aliphatic isocyanate | 3 g |
| Nitrocellulose | 3 g |
| Silicon dioxide | 20 g |
| Epoxy resin | 10 g |

The coating dispersion was evenly applied to a polyethylene terephthalate sheet containing carbon black (support, thickness: 250 µm) placed horizontally on a glass plate by using a doctor blade. Subsequently, the support having a layer of the coating dispersion was heated at a temperature gradually rising from 25 to 100° C, to form a subbing layer having a thickness of 30 µm on the support.

A particulate divalent europium activated barium fluorobromide ($BaFBr_{0.85}I_{0.15}:0.001Eu^{2+}$) stimulable phosphor, the above-mentioned polyacrylic resin, nitrocellulose and epoxy resin were added to methyl ethyl ketone in the following composition, and they were sufficiently mixed by means of a propeller agitator to prepare a homogeneous coating dispersion for a phosphor layer having a mixing ratio of 1 : 30 (binder : phosphor, by weight) and a viscosity of 2,5-3,5 Pa•s (25 - 35 PS) (at 25° C).

Composition of Coating Dispersion for Phosphor Layer

| | |
|---|---|
| $BaFBr_{0.85}I_{0.15}:0.001Eu^{2+}$ | 120.0 g |
| Polyacrylic resin | 3.2 g |
| Nitrocellulose | 0.4 g |
| Epoxy resin | 0.4 g |

The coating dispersion was evenly applied to the subbing layer provided on the support using the doctor blade. After the coating was complete, the support having a layer of the coating dispersion was heated to dryness in an air of a temperature of 90° C and a flow rate of 1.0 m/s for 10 min, to form a phosphor layer having a thickness of 150 µm on the subbing layer.

On the phosphor layer was placed a transparent polyethylene terephthalate film (thickness: 12 µm; provided with a polyester adhesive layer on one surface) to combine the transparent film and the phosphor layer with the adhesive layer.

Thus, a radiation image storage panel consisting essentially of a support, a subbing layer, a phosphor layer and a transparent protective film was prepared.

Comparison Example 7

The procedure of Example 8 was repeated except for not using the epoxy resin and using 110 g of the polyacrylic resin in the preparation of the coating dispersion for a subbing layer, to prepare a radiation image storage panel consisting essentially of a support, a subbing layer, a phosphor layer and a transparent protective film.

Example 9

The procedure of Example 8 was repeated except for using a polyurethane resin (trade name: Crisbon NT-150, available from Dainippon Ink & Chemicals, Inc.) instead of the polyacrylic resin and the nitrocellulose in the preparation of the coating dispersion for a subbing layer, to prepare a radiation image storage panel consisting essentially of a support, a subbing layer, a phosphor layer and a transparent protective film.

Composition of Coating Dispersion for Subbing Layer

| | |
|---|---|
| Polyurethan resin | 100 g |
| Silicon dioxide | 20 g |
| Epoxy resin | 10 g |

Comparison Example 8

The procedure of Example 9 was repeated except for not using the epoxy resin and using 110 g of the polyurethane resin in the preparation of the coating dispersion for a subbing layer, to prepare a radiation image storage panel consisting essentially of a support, a subbing layer, a phosphor layer and a transparent protective film.

The sensitivity of the radiation image storage panels obtained in Examples 8 and 9 and Comparison Examples 7 and 8 was measured in the same manner as described above. The results are set forth in Table 5.

Table 5

| | Example 8 | Com. Example 7 |
|---|---|---|
| Relative Sensitivity | 100 | 92 |
| | Example 9 | Com. Example 8 |
| Relative Sensitivity | 100 | 88 |

As is evident from Table 5, the subbing layers and the phosphor layers, which contained the epoxy group-containing compound, of the radiation image storage panels of the invention (Examples 8 and 9) were prevented from yellowing, and said panels were remarkably improved in the sensitivity as compared with the radiation image storage panels wherein the epoxy group-containing compound was not contained in the subbing layer (Comparison Examples 7 and 8), respectively.

Example 10

A subbing layer and a phosphor layer were formed on a support in the same manner as described in Example 8.

A polyester resin (adhesive agent, trade name: Vylon #300, available from Toyobo Co., Ltd.) and a bisphenol A-type epoxy resin having an avarage molecular weight of 800 were added to methyl ethyl ketone in the following composition, to prepare a 2 wt.% solution of the adhesive agent.

Composition of Solution of Adhesive Agent

| | |
|---|---|
| Polyester | 1.9 g |
| Epoxy resin | 0.1 g |
| Methyl ethyl ketone | 98 g |

The solution was evenly applied to a transparent polyethylene terephthalate film (protective film, thickness: 10 µm) by using a doctor blade to form a layer of the solution. Subsequently, the transparent film was laminated on the phosphor layer through the layer of the solution, to form an adhesive layer having a thickness of 1.5 µm and a transparent protective film on the phosphor layer

Thus, a radiation image storage panel consisting of a support, a subbing layer, a phosphor layer, an adhesive layer and a transparent protective film was prepared.

Comparison Example 9

The procedure of Example 10 was repeated except for not using the epoxy resin and using 2.0 g of the polyester resin in the preparation of the solution of the adhesive agent, to prepare a radiation image storage panel consisting of a support, a subbing layer, a phosphor layer, an adhesive layer and a transparent protective film.

The sensitivity and the deterioration characteristics of the radiation image storage panels obtained in Example 10 and Comparison Example 9 was evaluated according to the following tests.

(1) Sensitivity

The radiation image storage panel was exposed to X-rays at 80 kVp and then excited with a He-Ne laser beam (632.8 nm), to measure the sensitivity.

(2) Deterioration characteristics

After the radiation image storage panel was allowed to stand at a temperature of 60°C and at a humidity of 80 %RH for one week, the sensitivity of the panel was measured in the same manner as described above.

The results are set forth in Table 6.

Table 6

| | Relative Sensitivity | |
|---|---|---|
| | Just After Preparation | After Standing |
| Example 10 | 100 | 88 |
| Com. Example 9 | 95 | 82 |

As is evident from Table 6, the subbing layer, the phosphor layer and the adhesive layer, each of which contained the epoxy group-containing compound, of the radiation image storage panel according to the invention (Example 10) were prevented from yellowing just after the preparation thereof, and said panel showed the high sensitivity just after the preparation and the good resistance to deterioration with time, as compared with the radiation image storage panel wherein the epoxy group-containing compound was not contained in the adhesive layer (Comparison Example 9).

Example 11

A particulate divalent europium activated barium fluorobromide ($BaFBr_{0.85}I_{0.15}:0.001Eu^{2+}$) stimulable phosphor, a polyurethane resin (trade name: Pandex T-5265M, available from Dainippon Ink & Chemicals Inc.), nitrocellulose (trade name: RS120, available from Daicel Co., Ltd.), a bisphenol A-type epoxy resin having an avarage molecular weight of 800 and alkyldiallyl phosphite were added to a mixture of methyl ethyl ketone and toluene (having a ratio of 1 : 1, in volume) in the following composition, and they were sufficiently mixed by means of a propeller agitator to prepare a homogeneous coating dispersion I for a phosphor layer having a mixing ratio of 1 : 30 (binder : phosphor, by weight) and a viscosity of 2,5-3,5 Pa•s (25 - 35) (at 25° C).

Composition of Coating Dispersion I

| | |
|---|---|
| $BaFBr_{0.85}I_{0.15}:0.001Eu^{2+}$ | 600 g |
| Polyurethane resin | 15.8 g |
| Nitrocellulose | 2.0 g |
| Epoxy resin | 2.0 g |
| Alkyldiallyl phosphite | 0.2 g |

Independently, a polyurethane resin (trade name: Desmolac 4200, available from Sumitomo Bayer Urethane Co., Ltd.), the above-mentioned nirocellulose, aliphatic isocyanate (crosslinking agent, trade name: Desmodul 24370, available from the same) and alkyldiallyl phosphite were added to a mixture of toluene and isopropyl alcohol (having a ratio of 1 : 1, in volume) in the following composition, to prepare a coating dispersion II for a protective film having a viscosity of 0,2-0,3 Pa•s (2 - 3 PS) (at 25° C).

Composition of Coating Dispersion II

| | |
|---|---|
| Polyurethane resin | 6.9 g |
| Nitrocellulose | 2.0 g |
| Aliphatic isocyanate | 1.0 g |
| Alkyldiallyl phosphite | 0.1 g |

The coating dispersion I and the coating dispersion II were simultaneously applied in a superposing manner to a polyethylene terephthalate sheet containing carbon black (support, thickness: 250 µm) placed horizontally on a glass plate by using a two-hopper type coating apparatus. After the coating was complete, the support having superposed layers of the coating dispersions I and II was heated at a temperature gradually rising from 25 to 100 °C, to form a phosphor layer having a thickness of 250 µm and a protective film having a thickness of 10 µm on the support.

Thus, a radiation image storage panel consisting of a support, a phosphor layer and a protective film was prepared.

Example 12

The procedure of Example 11 was repeated except for further using 0.5 g of the epoxy resin and using 6.4 g of the polyurethane resin in the preparation of the coating dispersion II, to prepare a radiation image storage panel consisting of a support, a phosphor layer and a protective film.

Comparison Example 10

The procedure of Example 11 was repeated except for not adding the alkyldiallyl phosphite to the coating dispersion II, to prepare a radiation image storage panel consisting of a support, a phosphor layer and a protective film.

The sensitivity and the deterioration characteristics of the radiation image storage panels obtained in Examples 11 and 12 and Comparison Example 10 were evaluated according to the following test.

(1) Sensitivity

The radiation image storage panel was exposed to X-rays at 80 kVp and then excited with a He-Ne laser beam (632.8 nm), to measure the sensitivity.

(2) Deterioration characteristics

After the radiation image storage panel was allowed to stand at a temperature of 60 °C and at a humidity of 80 %RH for one week, the sensitivity of the panel was measured in the same manner as described above.

After the radiation image storage panel was exposed to light in an amount of 100,000 lux for 3 h using a high-voltage sodium lamp, the panel was measured on the sensitivity in the same manner as described above.

The results are set forth in Table 7.

Table 7

| | | Relative Sensitivity | | |
|---|---|---|---|---|
| | | Just After Preparation | After Standing | After Exposure |
| Example | 11 | 98 | 71 | 85 |
| Example | 12 | 100 | 82 | 98 |
| Com. Example | 10 | 45 | 25 | 15 |

As is evident from Table 7, the phosphor layer and the protective film, which contained the phosphite, of the radiation image storage panel according to the invention (Example 11) were prevented from yellowing just after the preparation thereof, and said panel was remarkably improved in sensitivity as compared with the radiation image storage panel wherein the phosphite was not contained in the protective film (Comparison Example 10).

Further, the radiation image storage panel wherein both the phosphite and the epoxy group-containing compound were contained in the protective film according to the invention (Example 12) was more improved in the resistance to deterioration with time and the resistance to light than the panel of Example 11.

Example 13

A phosphor layer and a protective film were formed on a support in the same manner as described in Example 11, to prepare a radiation image storage panel consisting of a support, a phosphor layer and a protective film.

Then, a vinyl chloride-vinyl acetate copolymer (trade name: SVR VYHH, available from Union Carbide Corp.), a polyacrylic resin (trade name: Dianal BR102, available from Mitsubishi Rayon Co., Ltd.) and a bisphenol A-type epoxy resin having an avarage molecular weight of 800 were added to methyl ethyl ketone in the following composition, to prepare a coating dispersion for a covering having a viscosity of 0,2 Pa•s (2 PS) (25°C).

Composition of Coating Dispersion for Covering

| | |
|---|---|
| Vinyl chloride-vinyl acetate copolymer | 6.0 g |
| Polyacrylic resin | 3.0 g |
| Epoxy resin | 1.0 g |

The coating dispersion was applied to the side surfaces of the panel and subsequently the panel was dried at room temerature for about 1 h, to form a polymer film having a thickness of 30 ± 10 µm on the side

surfaces.

Thus, a radiation image storage panel whose side surfaces were covered with a polymer film was obtained.

Comparison Example 11

The procedure of Example 13 was repeated except for not using the epoxy resin and using 7.0 g of the vinyl chloride-vinyl acetate copolymer in the preparation of the coating dispersion for a covering, to prepare a radiation image storage panel consisting of a support, a phosphor layer and a protective film and covered with a polymer film.

The radiation image storage panels obtained in Example 13 and Comparison Example 11 were observed with eyes. As a result, the panel wherein the epoxy group-containing compound and/or the phosphite were contained in the polymer film for covering, the phosphor layer and the protective film according to the invention (Example 13) was completely free from yellowing. On the contrary, the polymer film of the panel (Comparison Example 11), which did not contain the epoxy group-containing compound, was colored yellow.

**Claims**

1. A radiation image storage panel comprising a support and a phosphor layer provided on the support which comprises a binder and a stimulable phosphor dispersed therein, **characterized in that** said stimulable phosphor is a phosphor selected from the group consisting of divalent europium activated alkaline earth metal fluorohalide phosphors containing iodine and bismuth activated alkali metal halide phosphors containing iodine and that said phosphor layer contains a compound having an epoxy group and/or at least one compound selected from the group consisting of phosphites, organotin compounds and metal salts of organic acids.

2. The radiation image storage panel of claim 1, in which said compound having an epoxy group is contained in the phosphor layer in an amount of 0.001 - 10 % by weight of the stimulable phosphor.

3. The radiation image storage panel of claim 2, in which said compound having an epoxy group is contained in the phosphor layer in an amount of 0.03 - 3 % by weight of the stimulable phosphor.

4. The radiation image storage panel of claim 1, in which said compound having an epoxy group is at least one compound selected from the group consisting of 1,2-epoxypropane, 1,2-epoxybutane and an epoxy resin.

5. The radiation image storage panel of claim 1, in which said at least one compound selected from the group consisting of phosphites, organotin compounds and metal salts of organic acids is contained in the phosphor layer in an amount of 0.0001 - 3 % by weight of the stimulable phosphor.

6. The radiation image storage panel of claim 5, in which said at least one compound selected from the group consisting of phosphites, organotin compounds and metal salts of organic acids is contained in the phosphor layer in an amount of 0.003 - 0.3 % by weight of the stimulable phosphor.

7. The radiation image storage panel of claim 1, in which said phosphites are compounds having the formula (I) or (II):

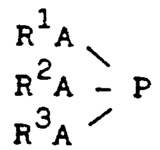

(I)

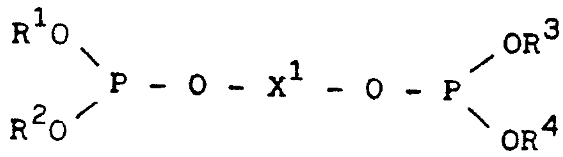

(II)

in which A is an oxygen atom or a sulfur atom; each of $R^1$, $R^2$, $R^3$ and $R_4$ is a hydrogen atom, an alkyl group or an aryl group, and $R^1$, $R^2$, $R^3$ and $R^4$ are the same or different from each other; and $X^1$ is a group comprising a carbon atom and/or an oxygen atom and/or a hydrogen atom.

**8.** The radiation image storage panel of claim 1, in which said organotin compounds are compounds having the formula (III):

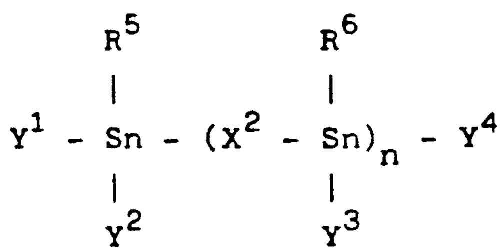

(III)

in which each of $R^5$ and $R^6$ is a hydrogen atom, an alkyl group or an aryl group, and $R^5$ and $R^6$ are the same or different from each other; each of $Y^1$, $Y^2$, $Y^3$ and $Y^4$ is an alkyl group, an aryl group, a fatty acid, a fatty acid derivative, mercaptan or a mercaptan carboxylic acid, and $Y^1$, $Y^2$, $Y^3$ and $Y^4$ are the same or different from each other; $X^2$ is an oxygen atom, a sulfur atom or a maleic acid; and $\underline{n}$ is 0 or an integer of not less than 1.

**9.** The radiation image storage panel of claim 1, in which said metal salts of organic acids are compounds having the formula (IV):

$(R^7COO)_mM$ (IV)

in which $R^7$ is an alkyl group or an aryl group having 1 - 20 carbon atoms, which may have at least one substituent; M is calcium, zinc, cadmium or barium; and $\underline{m}$ is a positive integer.

**10.** The radiation image storage panel of claim 1, in which said panel comprises a support, a light-reflecting layer containing a light-reflecting material and a phosphor layer, and said light-reflecting layer contains a compound having an epoxy group and/or at least one compound selected from the group consisting of phosphites, organotin compounds and metal salts of organic acids.

**11.** The radiation image storage panel of claim 10, in which said compound having an epoxy group is contained in the light-reflecting layer in an amount of 0.001 - 10 % by weight of the light-reflecting material.

**12.** The radiation image storage panel of claim 11, in which said at least one compound selected from the group consisting of phosphites, organotin compounds and metal salts of organic acids is contained in the light-reflecting layer in an amount of 0.001 - 3 % by weight of the light-reflecting material.

13. The radiation image storage panel of claim 1, in which said panel comprises a support, a subbing layer comprising a resin and a phosphor layer, and said subbing layer contains a compound having an epoxy group and/or at least one compound selected from the group consisting of phosphites, organotin compounds and metal salts of organic acids.

14. The radiation image storage panel of claim 13, in which said compound having an epoxy group is contained in the subbing layer in an amount of 0.03 - 100 % by weight of the resin.

15. The radiation image storage panel of claim 13, in which said at least one compound selected from the group consisting of phosphites, organotin compound and metal salts of organic acids is contained in the subbing layer in an amount of 0.003 - 30 % by weight of the resin.

16. The radiation image storage panel of claim 1, in which said panel comprises a support, a phosphor layer and a protective film comprising a polymer material, and said protective film contains a compound having an epoxy group and/or at least one compound selected from the group consisting of phosphites, organotin compounds and metal salts of organic acids.

17. The radiation image storage panel of claim 16, in which said compound having an epoxy group is contained in the protective film in an amount of 0.03 - 100 % by weight of the polymer material.

18. The radiation image storage panel of claim 16, in which said at least one compound selected from the group consisting of phosphites, organotin compounds and metal salts of organic acids is contained in the protective film in an amount of 0.003 - 30 % by weight of the polymer material.

19. The radiation image storage panel of claim 1, in which said panel comprises a support, a phosphor layer, an adhesive layer comprising a adhesive agent and a protective film, and said adhesive layer contains a compound having an epoxy group and/or at least one compound selected from the group consisting of phosphites, organotin compounds and metal salts or organic acids.

20. The radiation image storage panel of claim 19, in which said compound having an epoxy group is contained in the adhesive layer in an amount of 0.03 - 100 % by weight of the adhesive agent.

21. The radiation image storage panel of claim 19, in which said at least one compound selected from the group consisting of phosphosites, organotin compounds and metal salts of organic acids is contained in the adhesive layer in an amount of 0.003 - 30 % by weight of the adhesive agent.

22. The radiation image storage panel of claim 1, in which the side surface of said panel are covered with a polymer material and said polymer material contains a compound having an epoxy group and/or at least one compound selected from the group consisting of phosphites, organotin compounds and metal salts of organic acids.

23. The radiation image storage panel of claim 22, in which said compound having an epoxy group is contained in the polymer material in an amount of 0.1 - 100 % by weight of the polymer material.

24. The radiation image storage panel of claim 22, in which said at least one compound selected from the group consisting of phosphites, organotin compounds and metal salts of organic acids is contained in the polymer material in an amount of 0.01 - 10 % by weight of the polymer material.

**Revendications**

1. Panneau mémoire image de rayonnement comprenant un support et une couche de substance luminescente déposée sur le support, qui comprend un liant et une substance luminescente stimulable dispersée dans celui-ci, caractérisé en ce que cette substance luminescente stimulable est une substance luminescente choisie parmi les substances luminescentes de fluorohalogénure de métaux alcalino-terreux activés par l'europium divalent contenant de l'iode et les substances luminescentes d'halogénure de métaux alcalins activés par le bismuth contenant de l'iode, et en ce que cette couche de substance luminescente contient un composé ayant un groupe époxy et/ou au moins un composé choisi parmi les phosphites, les composés organiques de l'étain et les sels métalliques d'acides

organiques.

**2.** Panneau mémoire image de rayonnement selon la revendication 1, dans lequel ce composé ayant un groupe époxy est contenu dans la couche de substance luminescente dans une proportion de 0,001 à 10 % en poids de la substance luminescente stimulable.

**3.** Panneau mémoire image de rayonnement selon la revendication 2, dans lequel ce composé ayant un groupe époxy est contenu dans la couche de substance luminescente dans une proportion de 0,03 à 3 % en poids de la substance luminescente stimulable.

**4.** Panneau mémoire image de rayonnement selon la revendication 1, dans lequel ce composé ayant un groupe époxy est au moins un composé choisi parmi le 1,2-époxyproprane, le 1,2-époxybutane et une résine époxy.

**5.** Panneau mémoire image de rayonnement selon la revendication 1, dans lequel ce ou ces composé(s) choisi(s) parmi les phosphites, les composés organiques de l'étain et les sels métalliques d'acides organiques sont contenus dans la couche de substance luminescente dans une proportion de 0,0001 à 3 % en poids de la substance luminescente stimulable.

**6.** Panneau mémoire image de rayonnement selon la revendication 5, dans lequel ce ou ces composé(s) choisi(s) parmi les phosphites, les composés organiques de l'étain et les sels métalliques d'acides organiques sont contenus dans la couche de substance luminescente dans une proportion de 0,003 à 0,3 % en poids de la substance luminescente stimulable.

**7.** Panneau mémoire image de rayonnement selon la revendication 1, dans lequel ces phosphites sont des composés répondant aux formules (I) ou (II) :

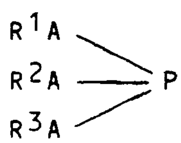

(I)

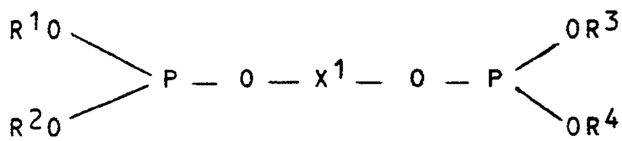

(II)

dans lesquelles A est un atome d'hydrogène ou un atome de soufre ; chacun des symboles $R^1$, $R^2$, $R^3$ et $R^4$ est un atome d'hydrogène, un groupe alkyle ou un groupe aryle et $R^1$, $R^2$, $R^3$ et $R^4$ sont identiques ou différents les uns des autres ; et $X^1$ est un groupe comprenant un atome de carbone et/ou un atome d'oxygène et/ou un atome d'hydrogène.

**8.** Panneau mémoire image de rayonnement selon la revendication 1, dans lequel ces composés organiques de l'étain sont des composés répondant à la formule (III) :

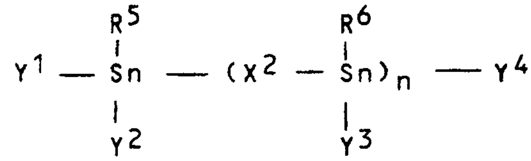

(III)

dans laquelle chacun des symboles $R^5$ et $R^6$ est un atome d'hydrogène, un groupe alkyle ou un groupe aryle, et $R^5$ et $R^6$ sont identiques ou différents les uns des autres ; chacun des symboles $Y^1$, $Y^2$, $Y^3$ et $Y^4$ est un groupe alkyle, un groupe aryle, un acide gras, un dérivé d'acide gras, un mercaptan

ou un acide mercaptan carboxylique, et $Y^1$, $Y^2$, $Y^3$ et $Y^4$ sont identiques ou différents les uns des autres ; $X^2$ est un atome d'oxygène, un atome de soufre ou un acide maléïque ; et $\underline{n}$ est 0 ou un entier non inférieur à 1.

9. Panneau mémoire image de rayonnement selon la revendication 1, dans lequel ces sels métalliques d'acides organiques sont des composés répondant à la formule (IV) :

$(R^7COO)_mM$ (IV)

dans laquelle $R^7$ est un groupe alkyle ou un groupe aryle ayant 1 à 20 atomes de carbone, qui peut avoir au moins un substituant ; M est le calcium, le zinc, le cadmium ou le baryum ; et $\underline{m}$ est un entier positif.

10. Panneau mémoire image de stockage selon la revendication 1, dans lequel ce panneau comprend un support, une couche réfléchissant la lumière contenant une matière réfléchissant la lumière et une couche de substance luminescente, et cette couche réfléchissant la lumière contient un composé ayant un groupe époxy et /ou au moins un composé choisi parmi les phosphites, les composés organiques de l'étain et les sels métalliques d'acides organiques.

11. Panneau mémoire image de rayonnement selon la revendication 10, dans lequel ce composé ayant un groupe époxy est contenu dans la couche réfléchissant la lumière dans une proportion de 0,001 à 10 % en poids de la matière réfléchissant la lumière.

12. Panneau mémoire image de rayonnement selon la revendication 11, dans lequel ce ou ces composés choisis parmi les phosphites, les composés organiques de l'étain et les sels métalliques d'acides organiques sont contenus dans la couche réfléchissant la lumière dans une proportion de 0,001 à 3 % en poids de la matière réfléchissant la lumière.

13. Panneau mémoire image de rayonnement selon la revendication 1, dans lequel ce panneau comprend un support, une couche de substrat comprenant une résine et une couche de substance luminescente, et cette couche de substrat contient un composé ayant un groupe époxy et/ou au moins un composé choisi parmi les phosphites, les composés organiques de l'étain et les sels métalliques d'acides organiques.

14. Panneau mémoire image de rayonnement selon la revendication 13, dans lequel ce composé ayant un groupe époxy est contenu dans la couche de substrat dans une proportion de 0,03 à 100 % en poids de la résine.

15. Panneau mémoire image de rayonnement selon la revendication 13, dans lequel ce ou ces composé(s) choisi(s) parmi les phosphites, les composés organiques de l'étain et les sels métalliques d'acides organiques sont contenus dans la couche de substrat dans une proportion de de 0,003 à 30 % en poids de la résine.

16. Panneau mémoire image de rayonnement selon la revendication 1, dans lequel ce panneau comprend un support, une couche de substance luminescente et un film protecteur comprenant une matière polymère, et ce film protecteur contient un composé ayant un groupe époxy et/ou au moins un composé choisi parmi les phosphites, les composés organiques de l'étain et des sels métalliques organiques.

17. Panneau mémoire image de rayonnement selon la revendication 16, dans lequel ce composé ayant un groupe époxy est contenu dans le film protecteur dans une proportion de 0,03 à 100 % en poids de la matière polymère.

18. Panneau mémoire image de rayonnement selon la revendication 16, dans lequel ce ou ces composé(s) choisi(s) parmi les phosphites, les composés organiques de l'étain et les sels métalliques d'acides organiques sont contenus dans le film protecteur dans une proportion de 0,003 à 30 % en poids de la matière polymère.

19. Panneau mémoire image de rayonnement selon la revendication 1, dans lequel ce panneau comprend un support, une couche de substance luminescente, une couche adhésive comprenant un agent adhésif et un film protecteur, et cette couche adhésive contient un composé ayant un groupe époxy et/ou au moins un composé choisi parmi les phosphites, les composés organiques de l'étain et les sels métalliques d'acides organiques.

20. Panneau mémoire image de rayonnement selon la revendication 19, dans lequel ce composé ayant un groupe époxy est contenu dans la couche adhésive dans une proportion de 0,03 à 100 % en poids de l'agent adhésif.

21. Panneau mémoire image de rayonnement selon la revendication 19, dans lequel ce ou ces composé(s) choisi(s) parmi les phosphites, les composés organiques de l'étain et les sels métalliques d'acides organiques sont contenus dans la couche adhésive dans une proportion de 0,003 à 30 % en poids de l'agent adhésif.

22. Panneau mémoire image de rayonnement selon la revendication 1, dans lequel la surface latérale de ce panneau est recouverte d'une matière polymère et cette matière polymère contient un composé ayant un groupe époxy et/ou au moins un composé choisi parmi les phosphites, les composés organiques de l'étain et les sels métalliques d'acides organiques.

23. Panneau mémoire image de rayonnement selon la revendication 22, dans lequel ce composé ayant un groupe époxy est contenu dans la matière polymère dans une proportion de 0,1 à 100 % en poids de la matière polymère.

24. Panneau mémoire image de rayonnement selon la revendication 22, dans lequel ce ou ces composé(s) choisi(s) parmi les phosphites, les composés organiques de l'étain et les sels métalliques d'acides organiques sont contenus dans la matière polymère dans une proportion de 0,01 à 10 % en poids de la matière polymère.

## Patentansprüche

1. Strahlungsbildspeicherplatte bzw. -tafel, umfassend einen Träger und eine auf dem Träger vorgesehene Leuchtstoffschicht, die ein Bindemittel und einen darin dispergierten stimulierbaren Leuchtstoff umfaßt, **dadurch gekennzeichnet**, daß der stimulierbare Leuchtstoff ein Leuchtstoff, gewählt aus der Gruppe, bestehend aus mit zweiwertigem Europium aktivierten Erdalkalimetallfluorhalogenidleuchtstoffen, enthaltend Jod, und mit Wismut aktivierten Alkalimetallhalogenidleuchtstoffen, enthaltend Jod, ist und daß die Leuchtstoffschicht eine Verbindung mit einer Epoxygruppe und/oder wenigstens eine Verbindung, gewählt aus der Gruppe, bestehend aus Phosphiten, Organozinnverbindungen und Metallsalzen von organischen Säuren, enthält.

2. Strahlungsbildspeicherplatte nach Anspruch 1, worin die Verbindung mit einer Epoxygruppe in der Leuchtstoffschicht in einer Menge von 0,001 bis 10 Gew.-% des stimulierbaren Leuchtstoffs enthalten ist.

3. Strahlungsbildspeicherplatte nach Anspruch 2, worin die Verbindung mit einer Epoxygruppe in der Leuchtstoffschicht in einer Menge von 0,03 bis 3 Gew.-% des stimulierbaren Leuchtstoffs enthalten ist.

4. Strahlungsbildspeicherplatte nach Anspruch 1, worin die Verbindung mit einer Epoxygruppe wenigstens eine Verbindung, gewählt aus der Gruppe, bestehend aus 1,2-Epoxypropan, 1,2-Epoxybutan und einem Epoxyharz, ist.

5. Strahlungsbildspeicherplatte nach Anspruch 1, worin die Verbindung, gewählt aus der Gruppe, bestehend aus Phosphiten, Organozinnverbindungen und Metallsalzen von organischen Säuren, in der Leuchtstoffschicht in einer Menge von 0,0001 bis 3 Gew.-% des stimulierbaren Leuchtstoffs enthalten ist.

6. Strahlungsbildspeicherplatte nach Anspruch 5, worin die Verbindung, gewählt aus der Gruppe, bestehend aus Phosphiten, Organozinnverbindungen und Metallsalzen von organischen Säuren, in der

Leuchtstoffschicht in einer Menge von 0,003 bis 0,3 Gew.-% des stimulierbaren Leuchtstoffs enthalten ist.

7. Strahlungsbildspeicherplatte nach Anspruch 1, worin die Phosphite Verbindungen mit der Formel (I) oder (II)

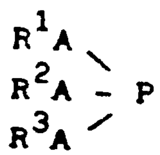

(I)

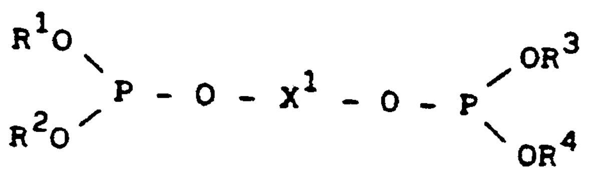

(II)

sind, worin A ein Sauerstoffatom oder ein Schwefelatom ist, jedes $R^1$, $R^2$, $R^3$ und $R^4$ ein Wasserstoffatom, eine Alkylgruppe oder eine Arylgruppe ist, und $R^1$, $R^2$, $R^3$ und $R^4$ gleich oder voneinander verschieden sind; und $X^1$ eine Gruppe, umfassend ein Kohlenstoffatom und/oder ein Sauerstoffatom und/oder ein Wasserstoffatom, ist.

8. Strahlungsbildspeicherplatte nach Anspruch 1, worin die Organozinnverbindungen Verbindungen mit der Formel (III)

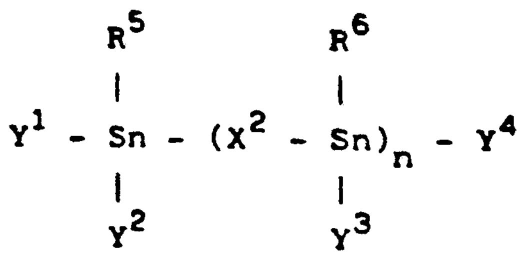

(III)

sind, worin jedes $R^5$ und $R^6$ ein Wasserstoffatom, eine Alkylgruppe oder eine Arylgruppe ist und $R^5$ und $R^6$ gleich oder voneinander verschieden sind, jedes $Y^1$, $Y^2$, $Y^3$ und $Y^4$ eine Alkylgruppe, eine Arylgruppe, eine Fettsäure, ein Fettsäurederivat, ein Mercaptan oder eine Mercaptancarbonsäure ist und $Y^1$, $Y^2$, $Y^3$ und $Y^4$ gleich oder voneinander verschieden sind; $X^2$ ein Sauerstoffatom, ein Schwefelatom oder eine Maleinsäure ist; und n 0 oder eine ganze Zahl von nicht weniger als 1 ist.

9. Strahlungsbildspeicherplatte nach Anspruch 1, worin die Metallsalze der organischen Säuren Verbindungen mit der Formel (IV)

$(R^7COO)_mM$ (IV)

sind, worin $R^7$ eine Alkylgruppe oder eine Arylgruppe mit 1 bis 20 Kohlenstoffatomen, die wenigstens einen Substituenten besitzen kann, ist; M Calcium, Zink, Cadmium oder Barium ist und m eine positive ganze Zahl ist.

10. Strahlungsbildspeicherplatte nach Anspruch 1, worin die Platte einen Träger, eine lichtreflektierende Schicht, enthaltend ein lichtreflektierendes Material, und eine Leuchtstoffschicht umfaßt und die lichtreflektierende Schicht eine Verbindung mit einer Epoxygruppe und/oder wenigstens eine Verbindung, gewählt aus der Gruppe, bestehend aus Phosphiten, Organozinnverbindungen und Metallsalzen von organischen Säuren, enthält.

**11.** Strahlungsbildspeicherplatte nach Anspruch 10, worin die Verbindung mit einer Epoxygruppe in der lichtreflektierenden Schicht in einer Menge von 0,001 bis 10 Gew.-% des lichtreflektierenden Materials enthalten ist.

**12.** Strahlungsbildspeicherplatte nach Anspruch 11, worin die Verbindung, gewählt aus der Gruppe, bestehend aus Phosphiten, Organozinnverbindungen und Metallsalzen von organischen Säuren, in der lichtreflektierenden Schicht in einer Menge von 0,001 bis 3 Gew.-% des lichtreflektierenden Materials enthalten ist.

**13.** Strahlungsbildspeicherplatte nach Anspruch 1, worin die Platte einen Träger, eine Grundierschicht, umfassend ein Harz, und eine Leuchtstoffschicht umfaßt und die Grundierschicht eine Verbindung mit einer Epoxygruppe und/oder wenigstens eine Verbindung, gewählt aus der Gruppe, bestehend aus Phosphiten, Organozinnverbindungen und Metallsalzen von organischen Säuren, enthält.

**14.** Strahlungsbildspeicherplatte nach Anspruch 13, worin die Verbindung mit einer Epoxygruppe in der Grundierschicht in einer Menge von 0,03 bis 100 Gew.-% des Harzes enthalten ist.

**15.** Strahlungsbildspeicherplatte nach Anspruch 13, worin die Verbindung, gewählt aus der Gruppe, bestehend aus Phosphiten, Organozinnverbindungen und Metallsalzen von organischen Säuren, in der Grundierschicht in einer Menge von 0,003 bis 30 Gew.-% des Harzes enthalten ist.

**16.** Strahlungsbildspeicherplatte nach Anspruch 1, worin die Platte einen Träger, eine Leuchtstoffschicht und einen Schutzfilm, umfassend ein Polymermaterial, umfaßt und der Schutzfilm eine Verbindung mit einer Epoxygruppe und/oder wenigstens eine Verbindung, gewählt aus der Gruppe, bestehend aus Phosphiten, Organozinnverbindungen und Metallsalzen von organischen Säuren, enthält.

**17.** Strahlungsbildspeicherplatte nach Anspruch 16, worin die Verbindung mit einer Epoxygruppe in dem Schutzfilm in einer Menge von 0,03 bis 100 Gew.-% des Polymermaterials enthalten ist.

**18.** Strahlungsbildspeicherplatte nach Anspruch 16, worin die Verbindung, gewählt aus der Gruppe, bestehend aus Phosphiten, Organozinnverbindungen und Metallsalzen von organischen Säuren, in dem Schutzfilm in einer Menge von 0,003 bis 30 Gew.-% des Polymermaterials enthalten ist.

**19.** Stahlungsbildspeicherplatte nach Anspruch 1, worin die Platte einen Träger, eine Leuchtstoffschicht, eine Klebeschicht, umfassend ein Klebemittel, und einen Schutzfilm umfaßt, und die Klebeschicht eine Verbindung mit einer Epoxygruppe und/oder wenigstens eine Verbindung, gewählt aus der Gruppe, bestehend aus Phosphiten, Organozinnverbindungen und Metallsalzen von organischen Säuren, enthält.

**20.** Strahlungsbildspeicherplatte nach Anspruch 19, worin die Verbindung mit einer Epoxygruppe in der Klebeschicht in einer Menge von 0,03 bis 100 Gew.-% des Klebemittels enthalten ist.

**21.** Strahlungsbildspeicherplatte nach Anspruch 19, worin die Verbindung, gewählt aus der Gruppe, bestehend aus Phosphiten, Organozinnverbindungen und Metallsalzen von organischen Säuren, in der Klebeschicht in einer Menge von 0,003 bis 30 Gew.-% des Klebemittels enthalten ist.

**22.** Strahlungsbildspeicherplatte nach Anspruch 1, worin die Seitenoberfläche der Platte mit einem Polymermaterial bedeckt ist und das Polymermaterial eine Verbindung mit einer Epoxygruppe und/oder wenigstens eine Verbindung, gewählt aus der Gruppe, bestehend aus Phosphiten, Organozinnverbindungen und Metallsalzen von organischen Säuren, enthält.

**23.** Strahlungsbildspeicherplatte nach Anspruch 22, worin die Verbindung mit einer Epoxygruppe in dem Polymermaterial in einer Menge von 0,1 bis 100 Gew.-% des Polymermaterials enthalten ist.

**24.** Strahlungsbildspeicherplatte nach Anspruch 22, worin die Verbindung, gewählt aus der Gruppe, bestehend aus Phosphiten, Organozinnverbindungen und Metallsalzen von organischen Säuren, in dem Polymermaterial in einer Menge von 0,01 bis 10 Gew.-% des Polymermaterials enthalten ist.

FIG. 1

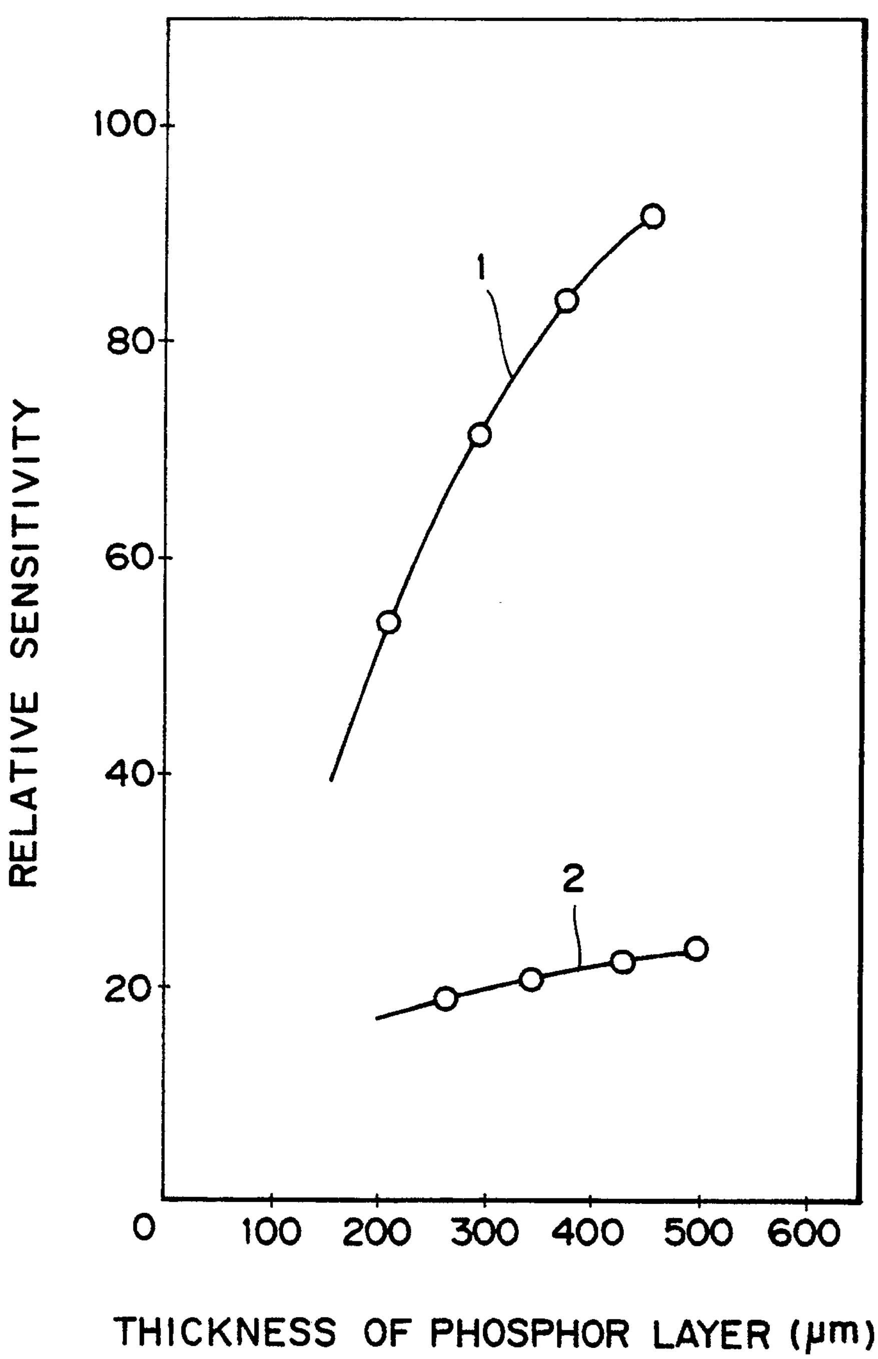
100
80
60
40
20
RELATIVE SENSITIVITY
1
2
0
100
200
300
400
500
600
THICKNESS OF PHOSPHOR LAYER (μm)

FIG. 2

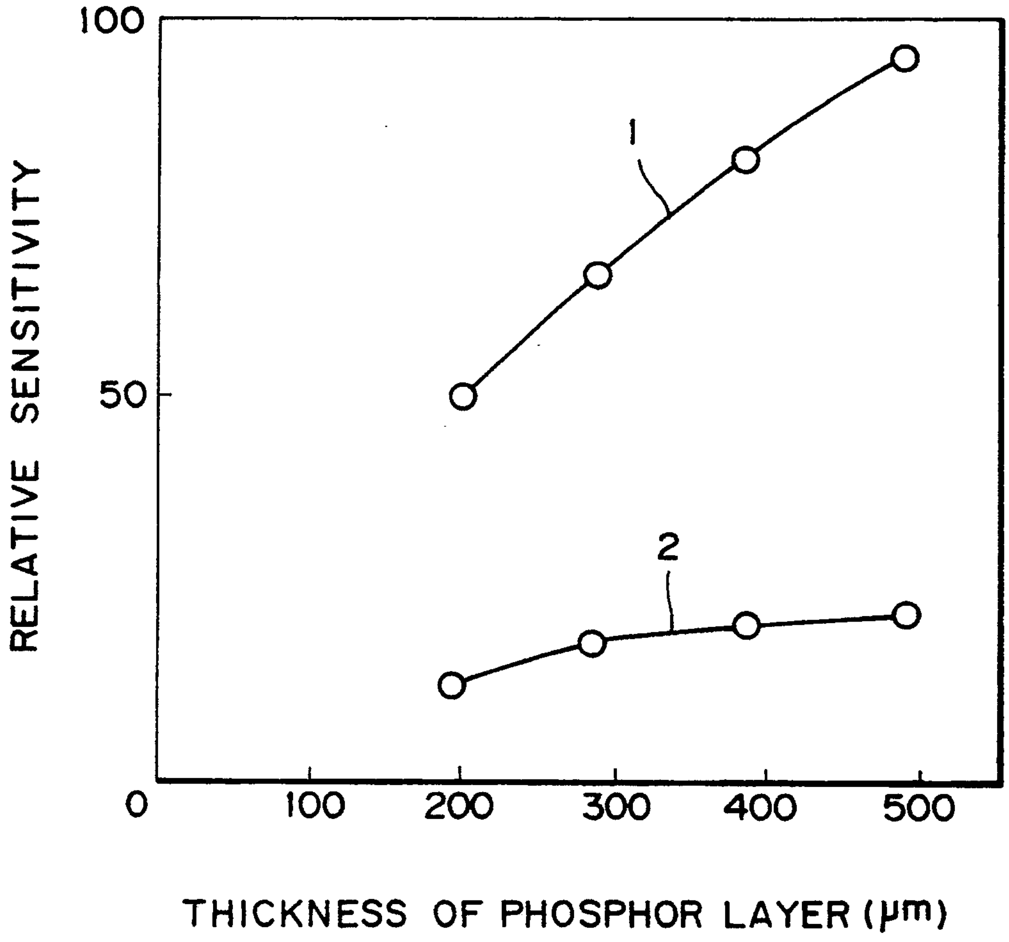
100
50
0
RELATIVE SENSITIVITY
1
2
100
200
300
400
500
THICKNESS OF PHOSPHOR LAYER (μm)